# EUROPEAN PATENT SPECIFICATION

(11) **EP 1 000 392 B1**
(45) Date of publication and mention of the grant of the patent: **27.02.2008**
(21) Application number: 99921615.3
(22) Date of filing: 03.05.1999
(51) Int. Cl.: G06F 17/30, H04L 12/28, H04L 12/24

(54) **EMBEDDED NETWORK MANAGEMENT SYSTEM FOR AN ECHELON NETWORK**
INTEGRIERTES NETZWERKMANAGEMENT-VERFAHREN FÜR EIN ECHELON NETZWERK
SYSTEME INCORPORE DE GESTION DE RESEAU ECHELON

(30) Priority: 05.05.1998 US 72794
(43) Date of publication of application: 17.05.2000
(73) Proprietor: Invensys Building Systems Inc., Loves Park, IL 61132 (US)
(72) Inventor: ADAMS, Robert, A., Midlothian, VA 23112 (US); ALLGOOD, Ottie, E., Mechanicsville, VA 23116 (US); SAUNDERS, Andrew, T., Richmond, VA 23233 (US)
(74) Representative: Serjeants
(86) International application number: PCT/US1999/009650
(87) International publication number: WO 1999/057621

(56) References cited:
- US-A- 5 453 924
- US-A- 5 513 324

## Description

### Technical Field

The present invention relates, in general, to network management systems. In particular, the present invention relates to method and systems for network management in an ECHELON network.

### Background of the Invention

The use of computer networking techniques is rapidly growing. Computer networks are being used to interconnect a wide variety of devices from industrial control systems to home appliances. In these emerging networks, many 'embedded' computers are being attached to networks. As used herein, the term 'embedded' computer refers to a device having a processor within it and in some cases limited user I/O ("input and/or output"), but lacking a complex user interface such as a large display and full keyboard. The term 'node' refers to a device that is connected to the network and is capable of communicating with other network devices. Similarly, the term 'embedded node' refers to a device having an embedded computer within it that is connected to a network and is capable of communicating with other network devices or nodes. The term 'local' or 'local coupling' refers to being coupled directly to other network nodes by a communication bus without any intervening devices. Conversely, the term 'remote' or 'remote coupling' refers to being coupled to other nodes indirectly, i.e. through another device, such as by "tunneling" through another network or device, or by modem.

E.g. Document US 5,453,924 discloses a distributed network product applicator control system using object-oriented software, windows interfacing distributed and Echelon LonWorks network technology.

Although embedded computers have conducted communications over networks in the past, network management systems supporting them have had various limitations. The term 'network management' as used herein refers to management of configurations, connections, and other parameters related to the particular network. In most instances where network management functionality is required, larger computers (e.g., user workstation) have been used to provide such functionality. This is problematic in networking environments where such larger computers are impractical or unfeasible. For example, in a small to medium sized HVAC (i.e., heating, ventilation and air-conditioning) system, it is not economically prudent to include a larger computer on the network with the embedded controller. Thus, for any network management function to be performed, it is conventional for a technician to arrive with a portable computer and attach it to the network, thereby facilitating certain network management functions.

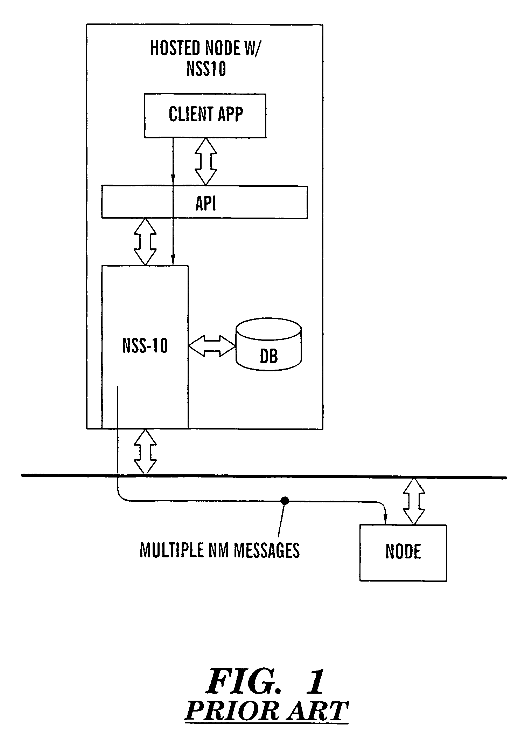

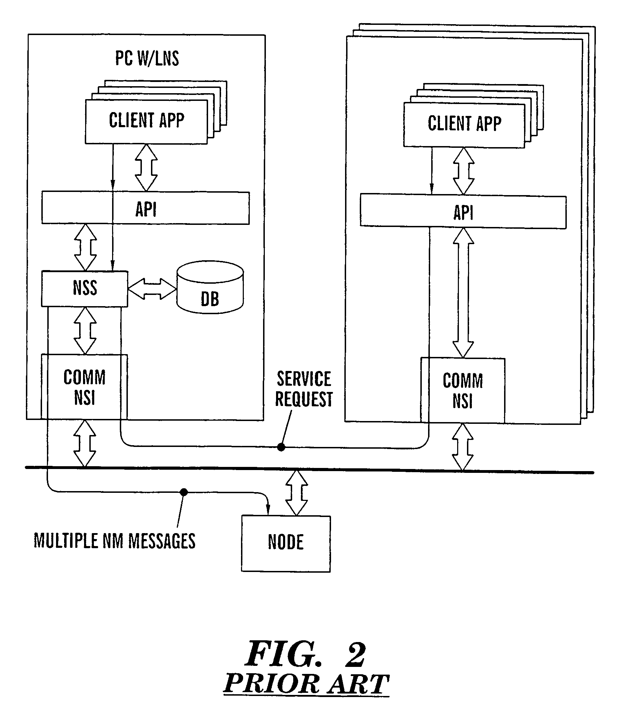

As one networking example, ECHELON networks (developed by Echelon Corporation of Palo Alto, CA) are used in a variety of embedded processor applications and are especially well-suited to networking process and environmental control devices. As used herein, the term 'ECHELON network' refers to a network consisting of devices or nodes that implement a LONTALK protocol. LONTALK is a trademark of the aforementioned ECHELON Corporation and refers to a protocol used by applications to communicate with nodes in an ECHELON network. An overview of the LONTALK protocol is described in section 8 of *Motorola LonWorks Technology Device Data, Rev. 3.1* (hereinafter, "LonWorks Tech. Publication") published in 1997 by Motorola Corporation of Palatine, Illinois. The LONTALK protocol provides a means of exchanging data between devices using Network Variables as described in sections 7.2 and 7.3 of the LonWorks Tech. Publication. There are various data structures within an Echelon device, which must be correctly configured for the device to function correctly. These data structures are described in Appendix A of the LonWorks Tech. Publication. The messages defined in the LONTALK protocol which are needed to configure these various data structures and otherwise control and monitor the device are described in Appendix B. One example of a prior art network management device for an ECHELON network is the model NSS-10 from Echelon Corp. shown in **Fig. 1**. The NSS-10 includes a hosted ECHELON node (i.e., an ECHELON communication chipset having a processor available for executing user applications) that includes a network database and a single client application locally attached thereto. Only a single, local, client application is supported. Another example of a prior art network management system for an ECHELON network is the model LNS system from Echelon Corp. shown in **Fig. 2**. LNS is a non-embedded solution and is too expensive and impractical for many ECHELON networks. For example, being non-embedded, LNS would have to be coupled remotely to the ECHELON network to support the network architectures common in the HVAC industry, i.e. by "tunneling" through other networks or by serial port modem. Such remote coupling generally introduces signal timing and other complexities into the system.

Thus, there does not exist a network management system for an ECHELON network that is embeddable, inexpensive and supportive of multiple clients. The present invention is a solution to this problem.

### Brief Description of the Drawings

The subject matter regarded as the present invention is particularly pointed out and distinctly claimed in the concluding portion of the specification. The invention, however, both as to organization and method of practice, together with further objects and advantages thereof, may best be understood by reference to the following detailed description taken in conjunction with the accompanying drawings in which:
**Figs. 1-2** are prior art network management implementations in ECHELON networks;
**Figs. 3-5** are system diagrams of components of network management systems in accordance with embodiments of the present invention;
**Fig. 6** is a data-flow diagram of message flow through the network database manager pursuant to an embodiment of the present invention;
**Fig. 7** is a data-flow diagram of message flow through the network service provider according to an embodiment of the present invention;
**Fig. 8** is a session state diagram according to an embodiment of the present invention;
**Fig. 9** is a representation of connection tables according to an embodiment of the present invention; and
**Fig. 10** is a representation of address tables according to an embodiment of the present invention.

### Detailed Description of a Preferred Embodiment

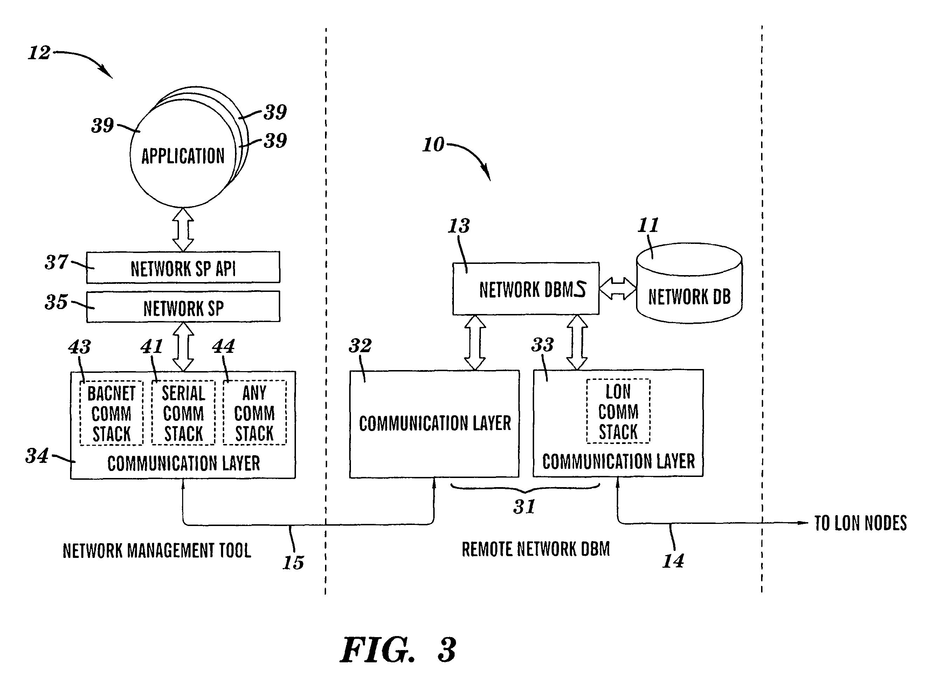

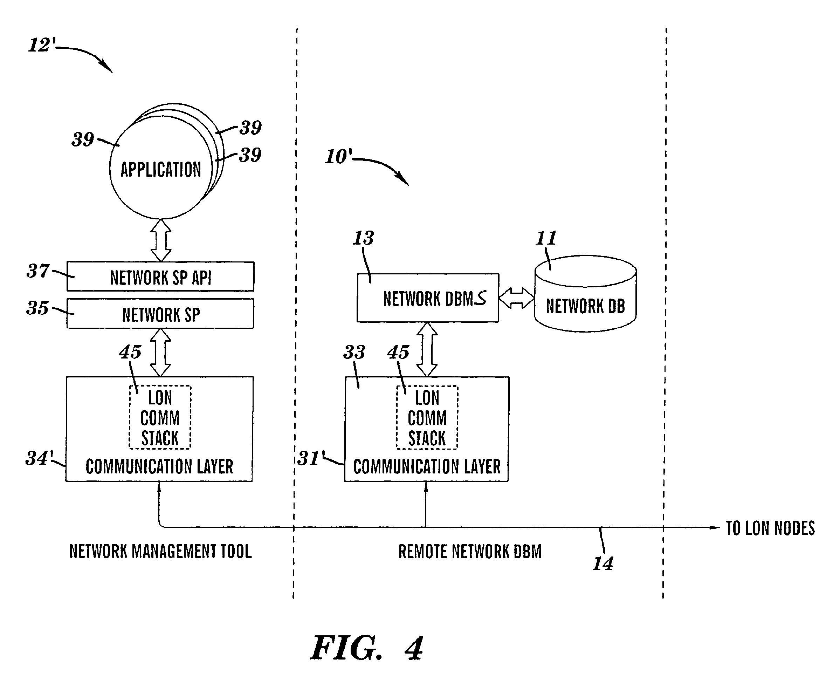

Turning to the Figures, various elements of an ECHELON network management system are depicted in accordance with the present invention. An important aspect of the present invention is the realization that in an ECHELON network management system, a particularly high volume of signal traffic may be generated between a network database and the nodes when a service is executed. The present invention thus includes an embedded node 10, 10', 16 (**Figs. 3****,** **4** **&** **5****,** respectively), including network database and communications elements, which is coupled locally on an ECHELON network 14 (**Figs. 3** **&** **4**). This local coupling provides a relatively high bandwidth connection to accommodate the relatively high traffic between the network database and nodes for improved system performance relative to prior art configurations. Having the network database locally coupled to the network eliminates the need to tunnel various messages needed to effect a network service when using a tiered architecture which is common in the HVAC industry.

More particularly, as shown in **Fig. 3****,** embedded node 10 includes a network database (network dB) 11 coupled to a network database manager (network DBMS) 13. A communications layer 31 includes com ports 32 and 33 adapted to couple node 10 to a workstation 12 via conventional network 15, and to an ECHELON network 14, respectively. As shown, communications layer 31 serves to connect network DB 11 to these networks via network DBMS 13. Network DBMS 13 is responsive to network management messages on ECHELON network 14 or workstation 12 such that network connectivity, variable and other information is maintained in accordance with the LONTALK specification.

In an alternate embodiment shown in **Fig. 4****,** node 10' includes a communications layer 31' which may include a single com port 33, including a LONCOM (trademark of SIEBE Corporation) communication stack 45, coupled to ECHELON network 14, which in turn, is coupled to workstation 12'.

Workstations 12 and 12' include further elements depicted in **Figs. 3** **&** **4**. Particularly, one or more application programs 39 communicate with a network service provider (network SP) 35 via a network service provider application programming interface 37 (network SP API). Network SP 35 is coupled to a communication layer. As shown in **Fig. 3****,** a communication layer 34 may include various communication stacks, such as a BACNET (trademark of 'ASHRAE' (the American Society of Heating, Refrigeration and Air Conditioning Engineers)) communication stack 43, a serial communication stack 41, and any other suitable communication stack 44 such that a variety of communication protocols are supported by workstation 12. In the embodiment shown in **Fig. 4****,** a communication layer 34' includes a LONCOM communication stack 45 for connecting workstation 12' to ECHELON network 14.

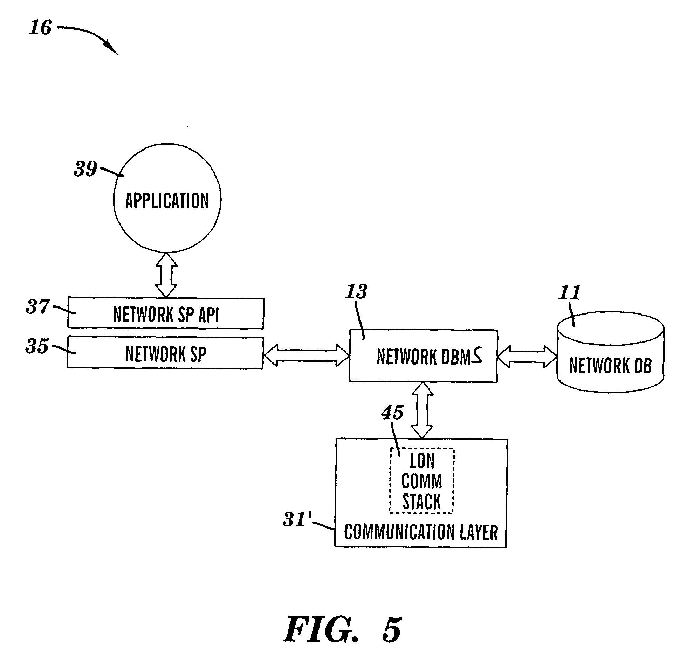

Although preferably embedded as discussed herein, in one embodiment of the present invention, network DBMS 13, network DB and network SP may be resident in a single computer, for example, a workstation 16 as depicted in **Fig. 5**. Network DB 11 is coupled through network DBMS 13 to communication layer 31'. Further, as discussed above, communication layer 31' includes LONCOM communication stack 45 for connection to an ECHELON network (not shown).

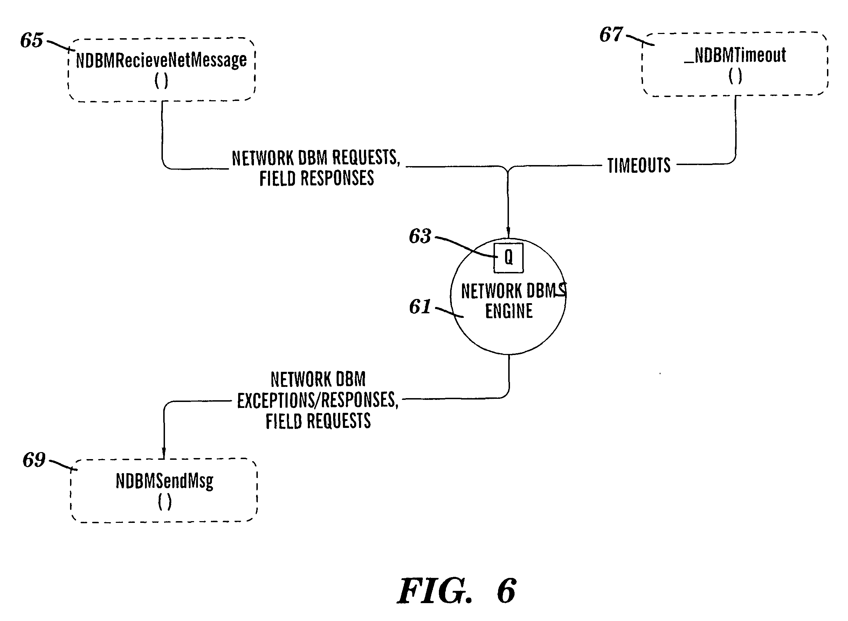

Operationally, **Figs. 6-7** are message flow diagrams corresponding to the network DBMS and the network SP. Turning first to **Fig. 6****,** a network DBMS engine 61 includes a queue 63 for handling message flow. Messages arrive through two mechanisms, the first being a network database manager receive network message function/procedure 65 (NDBMReceiveNetMsg()) which is responsible for receiving network DBMS requests and field responses from the communication layer. Timeouts for non-received messages/responses are communicated to network DBMS engine 61 through network database manager timeout procedure 67 (NDBMtimeout()). Timeouts are generated by the operating system of the host processor. Network DBMS engine 61 sends messages to ECHELON devices using the network DBMS send message function 69 (NDBMSendMsg()) which communicates through the communication layer.

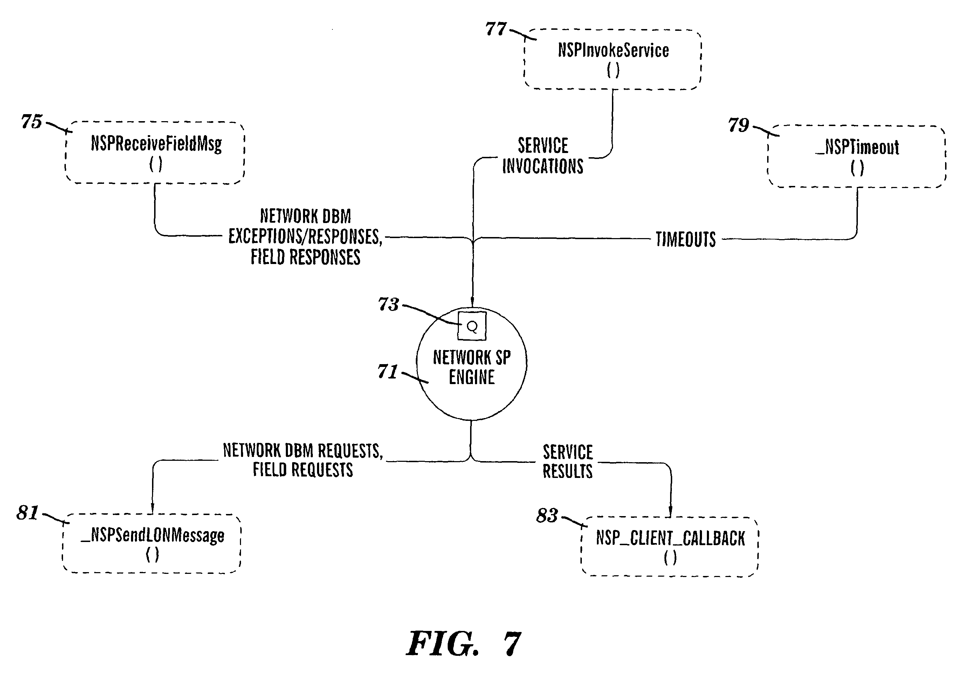

Network SP message flow is depicted in **Fig. 7**. A network SP engine 71 receives messages through a queue 73 from several sources. Firstly, incoming responses from local and remote client applications and the network DBMS arrive through the network SP receive field message function/procedure 75 (NSPReceiveFieldMsg()). Service invocations arrive through network service invocation function/procedure 77 (NSPInvokeService()). Service invocations are network management service requests from client applications. Further, timeouts for unacknowledged message sent by the network SP arrive (from the Operating System) via network service provider timeout function/procedure 79 (NSPTimeout()).

Outbound messages from network SP engine 71 may take several paths. A send field message function/procedure 81 (NSPSendLonMessage()) handles the sending of network DBMS requests to the network (the network DBMS may be local or remote). Service results are returned to clients using a client call back function/procedure 83 (NSPClientCallback()).

The software structures and function calls used in operation of the network DBMS and network SP are described in detail in the attached Appendix and are summarized hereinbelow.

The NETWORK SERVICE PROVIDER API is referenced in sections 6.n of the Appendix. Briefly, the Network SP API is the set of functions which allow applications to access the services of the Network SP and, indirectly, the Network DBMS. Beginning in section 6.2.1, the NSPInit() function initializes the Network SP. This allows multiple instances of the Network SP to be created to handle multiple logical networks.

The NSPClose() function is described in section 6.2.2. This function writes a terminate message to Network SP. The Network SP will then cleanup and terminate.

Prior to requesting any network management services, an application must register itself as a client with a call to NSPRegisterClient() as described in section 6.2.3 and receive a client handle. This handle will be called by the Network SP 35 to return responses to service invocations or pass exception messages received from the Network DBMS 13. A pointer to a function of type NSP_CLIENT_CALLBACK will also be passed to Network SP. This function will be called by the Network SP to return responses to service invocations or forward service pin messages from the Network DBMS. Successful registration also adds the client to the list of registered network SP clients. Conversely, the NSPDeregisterClient() function described in section 6.2.4 removes the client from the list of registered network SP clients.

A client invokes a service via the network SP by making a call to the NSPInvokeService() function described in section 6.2.5. In response to the invocation, the network SP will direct the request to either the network DBMS, or the network SP will handle it directly. Responses are returned from the network SP to the invoking client.

Each client application which will invoke network management services will supply a callback function which will process responses to service invocations. The call back function will be passed to the Network SP in a call to NSPRegisterClient() along with the callback handle. These client callback functions are discussed in section 6.2.6.

The Network SP is referenced in sections 7.n of the Appendix. Briefly described, the Network SP thread is started when the application calls NSPInit(). After initialization, the NSP thread waits for messages to arrive on its queue. Messages can arrive as requests from the application (placed on the queue by NSPInvokeService()), time out indications from the transaction timers, and responses or events from the Network DBMS.

As discussed in section 7.3, Network SP initialization starts with the creation of a message queue for receipt and transmission of messages. A communications link layer is next initialized, and handles transfer of information from the network SP to a remote network DBMS 13. Next, the network DBMS is located, as it may be either local or remote. If a network DBMS can not be found, initialization fails. Generally, the network DBMS is initialized before initialization of the Network SP.

Network SP operation is described in section 7.4. In summary of its operation, the network SP remains idle until a message arrives. Then, depending on the type of message, several execution paths are pursued. If the message is a service request from an application, then the request is forwarded to the network. A timer is started awaiting completion of the request via a confirmation response. The timer is configurable and specific wait times depend on the particular configuration.

If the message was a response (for example, from a service request), then the response timer is stopped and the response is returned to the application. If a time-out occurs (for example, the response timer expires) then a time-out response is returned to the application through client call back function/procedure 83.

Various optional Network SP Services which may be used to provide additional functionality to the network SP are set forth in sections 7.5.n. These services include NS_EXTRACT_XIF (section 7.5.1), which may be used to extract the external interface of a node from its self-identification / self documentation data. NS_DOWNLOAD_APPLICATION (Section 7.5.2) may be used to download a new application into a node. NS_READ_CP, (7.5.3) may be used to read a LonMark (trademark of Echelon Corporation) configuration property value from a node. Conversely, NS_WRITE_CP (7.5.4) may be used to write a LonMark configuration property value to a node.

Network DBMS operations and function calls are described in sections 8.n of the Appendix. Briefly described, the Network DBMS is started with a call to NetDBMInitialize(). It consists of a single thread and two queues: a message queue and a wait queue. The wait queue is used to store pending service invocations. The message queue will receive service invocations from Network SP, respond to network management commands the Network DBMS (NDBM) has made, transaction time outs and service pin indications. The NDBM performs only one service at a time. If it is in the process of handling a service and another service invocation arrives, the second and all subsequent invocations will be placed on the wait queue. After the first service is complete, the NDBM will remove the second invocation from the wait queue and begin processing it.

Beginning at section 8.3, network DBMS initialization is described. During initialization, the message queue and a wait queue is created, the communication link layer is opened, and a conflict check is performed to insure the existence of only one network DBMS.

Network DBMS operation is described in section 8.4. To summarize the operation, a main loop begins with the network DBMS waiting for messages to arrive on the message queue. Depending on a type of message received, different actions are taken. If the message is a service invocation, and if a service is currently being executed, the invocation is put on the wait queue. If a current service is not being executed the appropriate network database or network action is taken. In the event of a network management response, if the subject command is complete, the response is sent to the application, otherwise, the next network management Command is sent. Further, one type of message may be a time-out for an unanswered response, or a service pin per the LONTALK standard or protocol.

The WHILE state==IDLE will execute once since the state is modified in the subsequent statement. There will be some services which require many transactions (i.e. create Echelon Network Management messages to be sent to a node which requires waiting for a response). There are also some services which require no transactions and will therefore return the state to IDLE immediately. In the latter instance, the WHILE loop, which is within the DO loop, will process another message from the wait queue if one is there.

Appendix sections 8.5 and 8.6 contain network database manager service message formats and network DBMS request/response formats, respectively.

Described in sections 8.6.n are the network database manager function calls used to perform network database services. To begin, the NS_ADD_NODE service request adds a node to the node table as described in section 8.6.1. The algorithm for adding a node to the network database begins with checking whether the node already exists in the network database (i.e., to eliminate redundancy). Thereafter, the existence of the device on the network is verified and pertinent ECHELON related information is determined. The node is then set off-line, configured, and thereafter set on-line.

Removing a node is performed using the NS_REMOVE_NODE service request described in section 8.6.2. According to this function, the node is removed from the node table and placed in an unconfigured state. In summary, a node is removed by first verifying that it is currently a member of the network database and that it is not a part of any connection. Then it is removed from any address groups that it is within, set in an off-line and unconfigured state, and removed from the network database.

A node may be replaced with a new device using the NS_REPLACE_NODE service request of section 8.6.3. This service request may be utilized in the event a device fails and must be replaced. This allows the new device to be configured as the same node with the same network connections as the failed device. Algorithmically, replacing a node is similar to adding a node, however; in addition to setting the new node as on-line and configured, network variables are bound to the new device.

The NS_ADD_CONNECTION and NS_REMOVE_CONNECTION network management service requests of section 8.6.4 and 8.6.5 are used to add and remove network variable connections within the LONTALK configuration. To add a connection, the nodes between which the connection exists are verified to exist in the network database and to be active. Thereafter, variable format matching issues are resolved and address and network variable tables are updated to reflect the added connection. Correspondingly, removing a connection includes verifying that the connection exists, unbinding each target, and removing the target's network variables from the network database. If all targets within the connection are deleted, then the entire connection is removed from the network database.

Explicit creation of address groups is facilitated by the NS_ADD_ADDRESS_GROUP service request of section 8.6.6 and the NS_REMOVE_ADDRESS_GROUP service request of section 8.6.7. The NS_ADD_ADDRESS_GROUP service request may be utilized to add or modify an address group. This may be necessary in the event there is an application in any node which needs to send an explicit message using group addressing. The NS_REMOVE_ADDRESS_GROUP may be utilized to remove an address group from the Network DB AddressGroup Table.

To add an address group, it is initially determined whether the group presently exists. If the group does not exist, the group is created in the network database. Then, the address table in each affected node is updated. In regard to deletion of an address group, it will first be determined that no connections are currently using that group address. If not, then the group is removed from the database and the address table in each affected node is updated.

On occasion, the network DB will need reconstruction. The NS_RECOVER_DATABASE service request described in section 8.6.8 reconstructs the network database through an interrogation of the network topology. In short, this function "learns" the network topology and configuration. This service request will be invoked when the network database is missing, suspect or a new network has been installed. Operationally, the service request broadcasts a network message requesting responses from each node and constructs the node table accordingly. Once the node table has been constructed, each node is queried to determine all address tables and binding information.

A next group of function calls is used to handle connection descriptions within the network database. Firstly, connection descriptions are added using the NS_ADD_CONN_DESC service request of section 8.6.9. This function call first checks if the maximum number of connections has been exceeded, and if not, adds the connection description to the network database. The NS_MODIFY_CONN_DESC service request (section 8.6.10) is used to modify a connection description in the network DB. The network database is checked to verify that the connection description exists. The network database is then modified and all affected nodes are modified. Lastly, connection descriptions are removed from the network database using the NS_REMOVE_CONN_DESC service request of section 8.6.11. Functionally, removal includes verifying the connection descriptions existence, checking if it is currently used, and if unused, it is removed from the network database.

A next set of commands are used to "get" and "set" properties of objects within the network DB. The NS_GET_PROPERTY service routine of section 8.6.12 is used to retrieve a property of an object within the network DB. The function call is passed a property description and object identifier, and returns the corresponding property value. Conversely, the NS_SET_PROPERTY function call of section 8.6.13 is passed an object, a property and a value to which it sets the object property.

On occasion, it may be useful to either import or export the network database. This feature is useful for backup purposes, or for moving the network database to another node. The NS_EXPORT_DATABASE and NS_IMPORT_DATABASE service request of section 8.6.14 and 8.6.15, respectively, may be used to perform network database export and import.

To facilitate communications between the network SP and the network DBMS, the network SP registers with the network DBMS. The NS_REGISTER_NSP service request of section 8.6.16 facilitates the network SP registering with, and thereby receiving event notifications (i.e. exceptions) from the network DBMS.

Network DBMS exception messages are summarized in section 8.7 of the Appendix. These messages are event driven and generated by Network DBMS. From the point of view of a Network SP, all other communications are request/response with the SP requesting and NetDBM generating a response/error. Two exceptions to these communications are defined. The NS_XCP_NETWORK_SP_ADDED exception discussed in 8.7.1 allows all other currently registered NetworkSPs know that there is another user on the network. The NS_XCP_SERVICE_PIN exception discussed in 8.7.2 is generated when a service pin is pressed on any node on the wire and the service pin message is received by NetDBM.

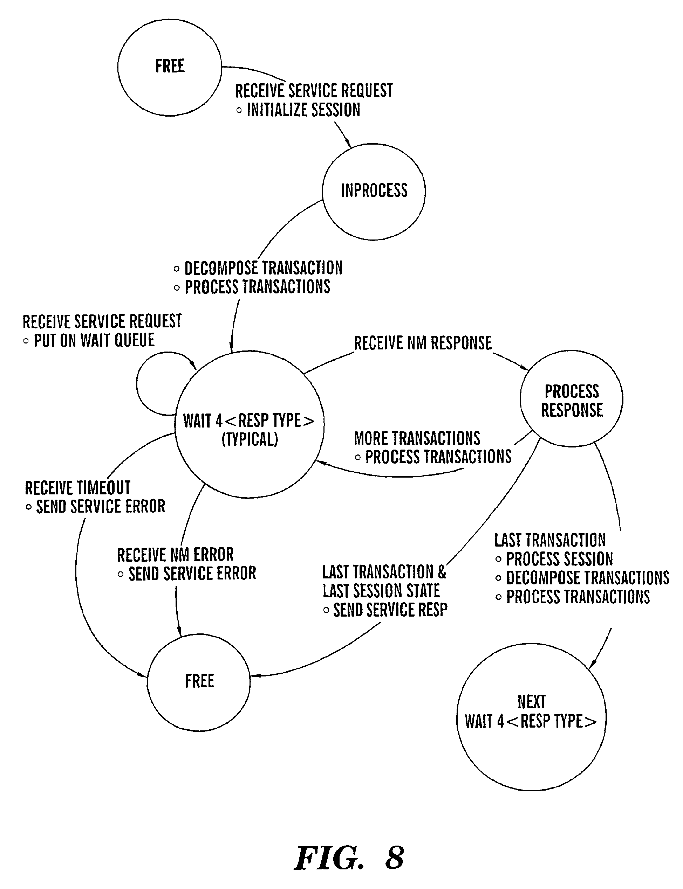

Internal Software Components are discussed in section 8.8, including the Session/Transaction State Machine described in section 8.8.1. The NetworkDBM must break each service request down to the appropriate modifications to the NetworkDB and make the appropriate changes in the affected nodes. Some services will require retrieving information from various nodes before further processing can be done. Depending on the complexity of the services a session state machine, such as shown in **Fig. 8****,** will be employed with a number of transactions possibly required for each state. In most cases a single transaction will result in a single Echelon Network Management message being sent to a device.

Occasionally errors may be generated in the event a modification to a device required to process some NetworkManagement services could not be completed. Recovery of such errors is discussed in 8.8.2.

Address Table Modifications are set forth in 8.8.3. This function is used to determine the address group for a particular connection. The address groups will be scanned for a fit and if not found, an existing group will be modified or a new group will be created.

Contained in section 9 is the network database structure. Within the network database are four tables, a Node Table, Connection Tables (including HubData and TargetData), and a Group Table. The Node Table is described in section 9.2.1 and contains information on the complete network database and information for each managed node which is needed by Network DBMS to process requested services.

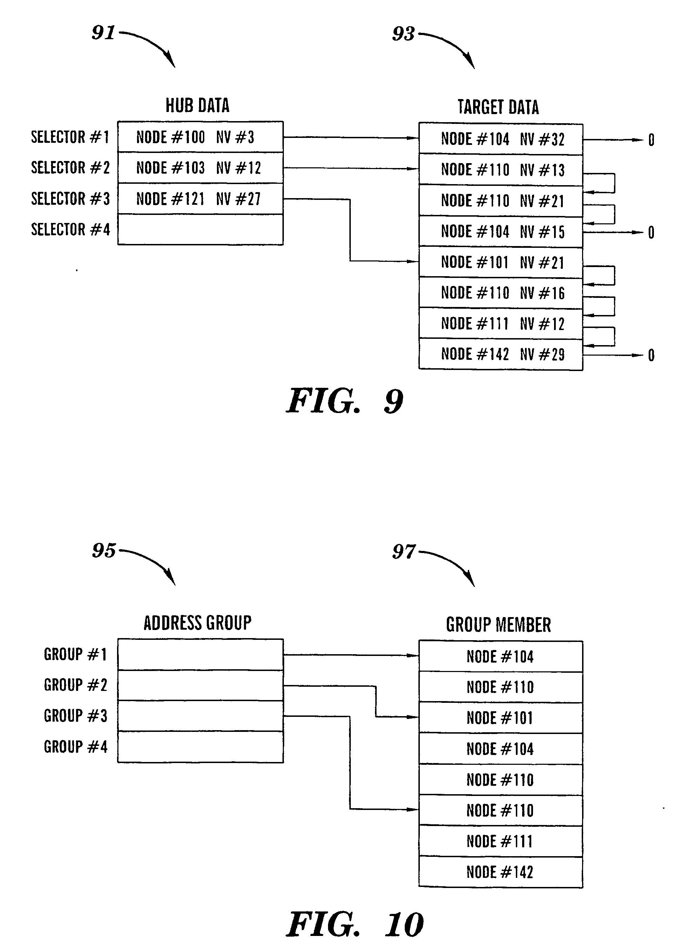

Information on network binding is contained in two Connection Tables discussed in 9.2.2 and shown in **Fig. 9****.** Network bindings can be one to one, one to many, or many to one. To represent this a hub is selected which is the end of the connection with only one Network Variable (NV). Information on the hub NV is maintained in the ConnectionHub Table or HubData Table 91 and indexed by selector number. Information on one or many target NV(s) is maintained in the ConnectionTarget Table or TargetData Table 93. The links between these tables are shown in **Fig. 9****.**

The Group Table is discussed in 9.2.3 and shown in **Fig. 10****.** The nodes within a given Domain can be organized in up to 255 groups. A node may belong to up to 15 groups. A group may span multiple subnets. A group may consist of a subset of MAX_NUM_NODES nodes. For acknowledged LONTALK message services a group is limited to 64 nodes. The Address Group information will be stored in two arrays. The asAddrGroup[] array 95 will be indexed by address group number and contain the index of the first member of the group in the asGroupMember[] array 97. The Group Table will also contain an array of connection descriptions.

### APPENDIX

### 5. ARCHITECTURE

### 5.1 Overview

The SEC NGS Network Management software has four components:
1. Network SP API
2. Network SP
3. Network DBM
4. Network DB

The attached diagrams illustrate how each of these components interacts with each other and other parts of the system. The functions and responsibilities of each component are further described in the following sections.

The Network SP and Network DBM will have to coexist with other applications which share common communications stacks. These applications and com stacks will connect through a Controller Message Router layer described in SDS-S-011.

### 6. Network Service Provider API

### 6.1 Overview

This is the set of functions which allow applications to access the services of the Network SP and, indirectly, the Network DBM.

### 6.2 API

### 6.2.1 NSPInit()

### Function Prototype

```
 ULONG NSPInit (NSP_HANDLE     *phNSP,
                NETWORK      Network,
                XBOOL        bLocalNetDBM)
```

### Parameter Description

phNSP - pointer to returned Network SP handle
Network - logical network number of the network this SP handles
bLocalNetDBM - TRUE if NetDBM running in the same process.

### Error Codes

Operating System Errors

### Algorithm

1. Initialize Network SP data
2. Create an NS_REGISTERED event semaphore to be posted by Network SP when we have registered with the Network DBM.
3. Launch Network SP thread

### 6.2.2 NSPClose()

### Function Prototype

ULONG NSPClose (NSP_HANDLE hNSP);
*Parameter Description*
hNSP - Network SP handle

### Error Codes

NM_ERROR_INVALID_HANDLE
Operating System Errors

### Algorithm

1. Wait for completion off outstanding transactions.
2. Deregister Network SP with Network DBM.
3. Close Communication Layer Connection, close queue and semaphore.

### 6.2.3 NSPRegisterClient()

### Function Prototype

```
 ULONG NSPRegisterClient (NSP_HANDLE              hNSP,
                          NSP_CLIENT_HANDLE      *phClientHandle,
                          NSP_CLIENT_CALLBACK     pfuncClientCallback,
                          NSP_CALLBACK_HANDLE     hCallBack);
```

### Parameter Description

hNSP - Network SP handle returned by call to NSPInit
phClientHandle - returns handle for use when requesting services
pfuncClientCallback - function implemented by application, called when Network SP service response or event message
hCallBack - handle passed in call back function.

### Error Codes

NM_ERROR_EXCEED_MAX_CLIENTS
NM_ERROR_WAIT_SEM_TIMEOUT
operating system errors

### Algorithm

1. Wait for NS_REGISTERED event semaphore.
2. Add client to list of register Network SP clients.
3. Return client handle.

### 6.2.4 NSPDeregisterClient()

### Description

NSPDeregisterClient() function causes the Network SP to close the handle opened during NSPRegisterClient() and performs any necessary cleanup.

### Function Prototype

```
 ULONG NSPDeRegisterClient ( NSP_HANDLE             hNSP,
                             NSP_CLIENT_HANDLE      hClientHandle);
```

### Parameter Description

hNSP - Network SP handle returned by call to NSPInit.
hClientHandle - handle of client to deregister

### Error Codes

NM_ERROR_INVALID_HANDLE

### Algorithm

1. Remove client from list of registered Network SP clients.

### 6.2.5 NSPInvokeService()

### Description

A registered client can invoke a service by making a call to NSPInvokeService(). The Network SP will validate the request parameters depending on the request type, forward it to the Network DBM or handle it directly. The Network SP will wait for a response which will be formated and return by calling the clients callback function.

### Function Prototype

```
 XULONG NSPInvokeService (NSP_HANDLE             hNSP,
                          NSP_CLIENT_HANDLE      hClientHandle,
                          XULONG                 ulClientTag,
                          XBYTE                  btServiceCode,
                          XVOID                  *pvRequestData,
                          XUSHORT                usRequestLen) ;
```

### Parameter Description

hNSP - handle to Network Service Provider
hClientHandle - handle returned to client application when it registered.
ulClientTag - client-supplied tag, returned with service response
btServiceCode - code representing service requested
pvRequestData - pointer to request data structure. Each service type has its own request parameters
usRequestLen - length of request data

### Error Codes

NM_ERROR_INVALID_HANDLE
operating system errors

### Algorithm

1. Pass service request to Network DBM.

### 6.2.6 NSPClientCallback functions

```
 XVOID (* NSP_CLIENT_CALLBACK)( NSP_CALLBACK_HANDLE hCallBack,
                      NM_SERVICE_MSG *psServMsg,
                      XUSHORT usLen);
```

### Parameter Description

hCallBack - handle supplied when client registered with the SP. This handle can be used to differentiate between instances of an application servicing multiple networks.
psServMsg - pointer to service message containing response data. See section 0 for description of this structure.
usLen - length of response data.

### 7. Network Service Provider

### 7.1 Overview

### 7.2 Message Flow

### 7.3 Initialization

### Algorithm

1. Create message queue
2. Open communications link layer
3. Locate Network DBM (local or remote). If the Network DBM cannot be found, initialization will fail.

### 7.4 Operation

### Algorithm

Wait for message to arrive
SWITCH on type of message type

| | | |
|---|---|---|
| CASE service request | | |
| | | Forward request to Network DBM |
| | | Start timer to wait for response |
| CASE response | | |
| | stop timer | |
| | return response to requesting application | |
| CASE time out | | |
| | return time out response to requesting application | |
| CASE exception | | |
| | pass exception to all client applications | |
| CASE terminate | | |
| | exit | |

### 7.5 Network SP Services

### 7.5.1 NS_EXTRACT_XIF (optional)

### Algorithm

1. Verify communications with node
2. Verify node is LonMark compliant
3. Query SI/SD data

### 7.5.2 NS_DOWNLOAD _APPLICATION (optional)

### Algorithm

1. Request lock from Network DBM
2. Take node off-line?
3. Segment / transmit application image
4. Restore connections?
5. Place node back online?

### 7.5.3 NS_READ_CP (optional)

### Algorithm

1. Determine configuration property type (SNVT, SCPT, etc.)
2.

### 7.5.4 NS_WRITE_CP (optional)

### 8. Network Database Manager

### 8.3 Initialization

The Network DBM thread and database are initialized by a call to NetDBMlnitialize(). This function takes parameters which determine the maximum number of nodes and connections which can be supported in the network database.

### Function Prototype

```
 NM_ERROR NetDBMInitialize ( XBYTE        btMaxNumNodes,
                             XUSHORT      usMaxNumHubs,
                             XUSHORT      usMaxNumTargets,
                             NETWORK      Network);
```

### Parameter Description

btMaxNumNodes - the maximum number of permanent nodes which can be supported by the database.
usMaxNumHubs - the maximum number of connection hubs supported by the database.
usMaxNumTargets - the maximum number of connection targets hubs supported by the database.
Network - logical network number of the network Network DBM manages

### NetworkDBM Start Up

When NetworkDBM runs for the first time within a device it must determine that it is the only instance currently running on its network. If it is the only NetworkDBM then it will perform an AddNode on itself. The following state diagram indicates the actions taken by NetworkDBM each time the device is reset.
The ServicePin message is used as the only reliable means of notifying another instance of NetworkDBM that a new device is present. Another NetworkDBM will send a NQAddSP messages in response to the ServicePin message. If this message is received before the timer expires then NetworkDBM will disable itself.

### Algorithm

1. Create message queue
2. Open communications link layer
3. Inform network that "I am the Network DBM". (See state diagram in **Error! Reference source not found.**)
4. Wait for any conflicting responses. If I_AM_NETDBM then process service requests.

### 8.4 Operation

### Algorithm

```
 DO
 Wait for message to arrive on message queue
 SWITCH on type of message type
 CASE service invocation
                     IF state == EXECUTING_SERVICE
                               put invocation on wait queue
              ELSE
 state = EXECUTING_SERVICE
 start service timer
 begin session to decompose service request to multiple NM requests as needed
 CASE NM response
      stop timer
      IF service is complete
              send response
      state = IDLE
              ELSE
                     send next NM command
 CASE time out
              return time out response to application
 CASE service pin
              forward service pin event to all registered clients
 END SWITCH

 WHILE state == IDLE
   read wait queue no wait
   IF message
 state = EXECUTING_SERVICE
 start service timer
 begin session to decompose service request to multiple NM requests as needed
WHILE (1)
```

### 8.5 Service Message

All communications between the Network SP and Network DBM use the following service message. Service messages will consist of a fixed header and a service specific message.

```
 typedef struct _NMServiceMsg {
                      XBYTE     btTransactionType;
                      XBYTE     btServiceType;
                      XUSHORT   usTag;
                      NMDATA    Data;
 } NM_SERVICE_MSG;
```

### Parameter Descriptions

btTransactionType - the type or message (REQUEST, RESPONSE, ERROR, EXCEPTION)
btServiceType - the service type (AddNode, AddConnection,...). This will define the type of message struct in Data.
usTag - tag used to match request and response.
Data - place holder for data specific to transaction type and service type. The specific data structures are described in the remainder of this section.

### 8.6 Network DBM Request / Response Services

For request/response services, if a service completes successfully the indicated response message will be returned to the client device. If no response structure is defined for a given service, zero length data will be returned as response data for a successful completion of the service. If an error occurs an error response will be sent. If no error response structure is defined for a particular service then the response will be a generic NRSP_ERROR structure containing the error code.

```
 typedef struct _NSErrorResponse {
    XULONG ulErrorCode;
 } NRSP_ERROR ;
```

### Parameter Descriptions

ulErrorCode - error code.

### 8.6.1 NS_ADD_NODE

### Description

This service will add a single node to the node table, assign a subnet and node address and commission it. The device identifier will be passed as a node handle which will be used as a reference to the device in future transactions. On successful completion of the service the subnet / node address of the node will be returned.

```
 typedef struct _NSAddNode {
                     NEURON_ID     NeuronId
 } NS_ADD_NODE;
 typedef_NRspAddNode {
                    NODEHANDLE     hNode;
 } NRSP_ADD_NODE;
```

### Service Parameters

The AddNode service is invoked using the NS_ADD_NODE structure, with the following parameters: NeuronID - unique 48bit neuron ID of Neuron Chip on the node to be added.

### Response Data

If the AddNode service completed successfully a response is returned using the NRSP_ADD_NODE structure.
SubNet - the devices assigned subnet within its domain. Valid values are 1-255. The subnet and node will be the address of the device for direct communication.
Node - the devices assigned node within its domain and subnet. Valid values are 1-127.

### Error Codes

NM_ERROR_DUPLICATE_NODE
NM ERROR_DEVICE_NOT_FOUND
NM_ERROR_COMMISSIONING_FAILED

### Algorithm

1. Check if node already exists in database.
2. Verify device exists and is accessible on Field Bus.
3. ReadOnly program Id
4. Read node info
   a) ReadOnly NV Count and pSNVTInfo
   b) Read SNVT Structure
      i) If hosted node then QuerySNVT offset 0 count 6
      ii) If neuron based then Read Absolute pSNVInfo count 6
   c) ReadOnly Offset 0x15 - 0x1D - address count, two domains ...
   d) Read SNVT info
      i) If hosted node then use QuerySNVT
      ii) If neuron based then Read Absolute from pSNVTInfo
   e) Query NV Config
   f) NV Fetch
5. Set node in offline/unconfigured state
   a) Set Mode "Application Offline"
   b) Set State "UnConfigured"
   c) Clear status
   d) Reset
6. Configure Domain
   a) Update Domain 0
   b) Leave Domain 1
7. Write Configuration Data
   a) Set ChannedId
   b) Clear NodePriority slot
   c) Clear Location String
8. Clear Address Table
9. Unbind NVs
10. Set NM Authentication
11. Set node in online/configured state
   a) Set State "Configured Online"
   b) Set Mode "Application Offline"
   c) Set Mode "Application Online"

### 8.6.2 NS_REMOVE_NODE

### Description

This service will delete a device from the node table. The device will be placed in an unconfigured state. No response data is defined. A response will indicate success of the service.
All connections to this device should be deleted before the node is removed.

```
 typedef struct _NSRemoveNode {
                      NODEHANDLE      hNode;
 } NS_REMOVE_NODE;
```

### Service Parameters

This the Remove Node service is invoked using the NS_ REMOVE _NODE structure, with the following parameters:
hNode - the handle for the Node to be removed from the database.

### Result Data

No result data.

### Error Codes

NM_ERROR_INVALID NODE
NM_ERROR_NODE_STILL BOUND
NM_ERROR_MODIFYING_ADDRESS_GROUP
NM_ERROR_MODIFYING_CONNECTION

### Algorithm

1. Verify node is currently member of database.
2. Verify this node not a part of any connection.
3. Remove node from address groups
4. Set node in offline/unconfigured state
   a) Set Mode "Application Offline"
   b) Set State "UnConfigured"
   c) Clear status
   d) Reset
5. Clear Domain table
6. Remove node from database

### 8.6.3 NS_REPLACE_NODE

### Description

This service will replace an existing node with a new device. The node table will be modified and the node commissioned.

```
 typedef struct _NSReplaceNode {
                      NEURON_ID      NeuronId
                      NODEHANDLE     hNode;
 } NS_REFLACE_NODE;
```

### Service Parameters

The Replace Node service is invoked using the NS_ REPLACE _NODE structure, with the following parameters:
NeuronID - unique 48bit neuron ID of Neuron Chip on the node to be added.
hNode - the unique node handle used to identify the device by NetworkDBM. This handle will be used to match the original devices data.

### Result Data

No result data.

### Error Codes

NM_ERROR_DEVICE_NOT_FOUND
NM_ERROR_COMMISSIONING_FAILED

### Algorithm

1. Process same as addnode except as follows.
2. Update NVConfig for all bound NVs.

### 8.6.4 NS_ADD_CONNECTION

### Description

This service will add or incrementally modify a connection. The connection will bind one output NV to many input NVs or many outputs to one input. The one is referred to as the Hub and the many are referred to as targets. A connection point is designated by an NV_REFERENCE which indicates the NVindex of the NV to be included in the connection and the nodehandle of the node which contains the NV.

```
 typedef XBYTE DESRIPTION_ID;
 typedef struct _NVReference {
                    NODEHANDLE     hNode;
                    NVINDEX NVIndex;
 } NV_REFERENCE;
 typedef struct _NSAddConnection {
                   XBYTE      btHubNVDirection;
                   CONN_DESC_ID    ConnDescId;
                   NV_REFERENCE    NVHub;
                   XBYTE      btTargetCount;
                   NV_REFERENCE    NVTarget[];
} NS_ADD_CONNECTION;
```

### Service Parameters

The Add Connection service is invoked using the NS_ADD_CONNECTION structure, with the following parameters:
ConnDescld - indicates the connection description to be used in configuring the binding.
btHubNVDirection - indicates it the Hub NV is an input or output NV.

| | |
|---|---|
| INPUT | 0 |
| OUTPUT | 1 |

NVHub - the node and NVindex of the connection hub
btTargetCount - the number of targets in the connection
NVTarget - an array of usTargetCount nodes and NVindices for the connection targets

### Result Data

None.

### Error Codes

NM_ERROR_NV_MISMATCH - SNVT types do not match or NV size mismatch
NM_ERROR_DIRECTION_MISMATCH - input and output NV mismatch
NM_ERROR_POLL_MISMATCH -
NM_ERROR_EXCEED_MAX_CONNECTIONS -

### Algorithm

1. Verify the Nodes exist in database.
2. Check nodes status.
3. Verify that SNVT types match.
4. Verify that Hub and target(s) directions complement.
5. Call SelectAddressGroup().
6. If no errors then create binding.
   a) Update Address tables as needed
   b) Update NV Config tables

### 8.6.5 NS_REMOVE_CONNECTION

### Description

This service will remove one or more target NVs from a connection. The Hub NV will serve as the reference to the connection. If all target NV are removed the Hub will also be removed.

```
 typedef struct _NSRemoveConnection {
                      NV_REFERENCE    NVHub;
                      XBYTE     btTargetCount;
                      NV_REFERENCE    NVTarget;
 } NS_REMOVE_CONNECTION;
```

### Service Parameters

The Remove Connection service is invoked using the NS_REMOVE _CONNECTION structure, with the following parameters:
NVHub - the node and NVindex of the Hub of the connection. This uniquely identifies the connection to be modified.
btTargetCount - this will indicate the number of target connections to delete. If the count is 0 then all target connections and the Hub will be deleted.
NVTarget - this will be an array of usTargetCount structures which indicate the node and NVindex of the new connections
NVTarget[].Node - Node of containing NV to delete from connection.
NVTarget[].NVIndex - the index of the NV to delete from the connection. If 0 then all NVs in the specified node will be deleted.

### Result Data

No data.

### Error Codes

NM_ERROR_INVALID_HUB
NM_ERROR_INVALID_TARGET

### Algorithm

1. Verify connection exists and designated targets are members.
2. For each target
   a) Set NVconfig to unbound state
   b) Remove target from database
3. If all targets deleted
   a) Set Hub NVconfig to unbound state
   b) Remove connection from database

### 8.6.6 NS_ADD_ADDRESS_GROUP

### Description

This service is used to add or modify an address group. This may be necessary if there is an application in any node which needs to send an explicit message using group addressing.

```
 typedef _NSAddAddressGroup {
                      CONN_DESC_ID      ConnDescId;
                      XBYTE    btDeviceCount;
                      NODEHANDLE        ahNode[];
 } NS_ADD_ADDRESS_GROUP;
 typedef struct _NRspAddGroup {
   GROUP_ID     GroupId;
 } NRSP_ADD_ADDRESS_GROUP;
```

### Service Parameters

The Add Address Group service is invoked using the NS_ADD_ADDRESS_GROUP structure, with the following parameters:
ConnDescId - the index in the address group table for this address group
btDeviceCount - the number of nodes in this group.
ahNode - an array of btDeviceCount node handles for the devices which make up the group. If the group exist then any new members will be added to group.

### Result Data

GroupId - group id number assigned by Network DBM

### Algorithm

1. Determine scope -
   a) If not a current group then add address group to table
   b) If group exits and no change
      i) return group id
2. modify table
3. update node table
4. update connection list

### Error Codes

NM_ERROR_INVALID_NODE

### 8.6.7 NS_REMOVE_ADDRESS_GROUP

### Description

This service will remove an address groups from the Network DB AddressGroup Table.

```
 typedef struct _NSRemoveAddressGroup{
                      GROUP_ID   GroupId;
 } NS_REMOVEADDRESSGROUP;
```

### Service Parameters

The Remove Address Group service is invoked using the NS_REMOVEADDRESSGROUP structure, with the following parameters:
GroupId - an array of integers containing the index in the address group table for the address groups to be deleted.

### Result Data

None.

### Error Codes

NM_ERROR_INVALID_ADDRESS_GROUP
NM_ERROR_ADDRESS_GROUP_INUSE

### Algorithm

1. verify no bindings using this group
2. modify database tables
3. modify address tables in affected nodes

### 8.6.8 NS_RECOVER_DATABASE

### Description

This service will be used to command Network DBM to interrogate the network in order to build a Network DB. The Network DBM will discover the network topology and learn the NV connections. This service will be invoked when the database is missing, suspect or a new network has been installed.

```
 typedef _NSRecoverDatabase {
                   DOMAIN       Domain;
 } NS_RECOVER_DATABASE;
 typedef _NRSPSRecoverDatabase {
                   XBYTE       btNumDevices;
                   XBYTE       btNumAddressGroups;
                   USHORT      usNumBindings;
 } NRSP_RECOVER_DATABASE;
```

### Service Parameters

This service is invoked using the NS_RECOVER_DATABASE structure, with the following parameters:
Domain - the domain of the devices to recover database for.

### Result Data

The result of this service is returned in a NRSP_RECOVER_DATABASE structure, with these parameters: ucNumDevices - number of devices recover to the Node table.
ucNumAddressGroups - number of groups recover to the Group tables.
usNumBindings - number of bindings recover to the Connection tables.

### Error Codes

NM_ERROR_NO_DEVICES_DETECTED

### Algorithm

1. Discover connected nodes
   a) Broadcast "respond to query" NM message
   b) collect responses to populate node table
2. Query each node
   a) query domain table
   b) query address table
   c) query NV config table

### 8.6.9 NS_ADD_CONN_DESC

### Description

This service will add a connection description to the database.

```
 typedef XBYTE DESRIPTION_ID;
 typedef struct _ConnDescription {
                     XBYTE        btServiceType;
                     XBYTE        btPriority;
                     XBYTE        btAuthenticate;
                     XBYTE        btRetryCount;
                     XBYTE        btRepeatTimer;
                     XBYTE        btReceiveTimer;
                     XBYTE        btTransmitTimer;
 } CONNECTION_DESC;
 typedef struct _ NSAddConnDesc {
                     CONNECTION_DESC         sConnectDesc;
 } NS_ADD_CONN_DESC;
 typedef struct _NRSPAddConnDesc {
                     CONN_DESC_ID      ConnDescId;
 } NRSP_ADD_CONN_DESC;
```

### Service Parameters

The Add Connection Description service is invoked using the NS_ADD_CONN_DESC structure, with the following parameters:
sConnectDesc. btServiceType -

| | |
|---|---|
| ACKD | 0 |
| UNACKD_RPT | 1 |
| UNACKD | 2 |

sConnectDesc. btPriority - indicates use of priority connections.
sConnectDesc. btAuthenticate - indicates use of authentication
sConnectDesc. btRetryCount - number of times to retry an acknowledged message. Valid values 0-15. Used for ACKD service type.
sConnectDesc. btRepeatTimer - number of times to repeat a repeated message. Valid values 0-15. Used for UNACKD_RPT service type.
sConnectDesc. btReceiveTimer - encoded value of the repeat time. Valid values 0-15. Used for UNACKD_RPT service type.
sConnectDesc. btTransmitTimer - encoded value of the receive timer. Valid values 0-15. Used for REQUEST/RESPONSE service type.

### Response Data

ConnDescId - index of conncection descriptions, used in other service to designate connection description.

### Error Codes

### Algorithm

1. Check if MAX_NUMBER_CONN_DESC.
2. Add to database.

### 8.6.10 NS_MODIFY_CONN_DESC

### Description

This service will modify a connection description in the database.

```
 typedef struct _ NSModifyConnDesc {
                      CONN_DESC_ID      ConnDescId;
                      CONNECTION_DESC        sConnectDesc;
 } NS_MODIFY_CONN_DESC;
```

### Service Parameters

The Modify Connection Description service is invoked using the NS_MODIFY_CONN_DESC structure.
The parameters are the same as the with the following:
ConnDescId - handle for connection description to modify.
SConnectDesc - new connection description parameters.

### Result Data

None.

### Error Codes

### Algorithm

1. Verify Connection Description exits.
2. Modify database tables.
3. Modify tables in affected nodes.

### 8.6.11 NS_REMOVE_CONN_DESC

### Description

This service will remove a connection description in the database.

```
 typedef struct - NSModifyConnDesc {
                      CONN_DESC_ID     ConnDescId;
 } NS_MODIFY_CONN_DESC;
```

### Service Parameters

The Modify Connection Description service is invoked using the NS_ MODIFY_CONN_DESC structure.
The parameters are the same as the with the following:
ConnDescld - handle for connection description to delete.

### Result Data

None.

### Error Codes

NM_ERROR_CONN_DESC_INUSE

### Algorithm

1. Verify Connection Description exits.
2. Verify connection description not in use for any connection.
3. Delete from database.

### 8.6.12 NS_GET_PROPERTY

### Description

This service is used to retrieve a property from the Network DB.

```
 typedef      XBYTE    NETWORKDBOBJECT;
 typedef      ULONG    NETWORKOBJECTINSTANCE;
 typedef      XBYTE    NETWORKDBPROPERTY;
 typedef _NSGetProperty {
                         NETWORK_DB_OBJECT             eNetObjectType;
                         NETWORK_DB_OBJECT_INSTANCE    NetObjectInstance;
                         NETWORK_DB_PROPERTY           eNetDBProperty;
 } NS_GET_PROPERTY;
 typedef _NSGetProperty {
                         NETWORK_DB_OBJECT             eNetObjectType;
                         NETWORK_DB_OBJECTINSTANCE     NetObjectInstance;
                         NETWORK_DB_PROPERTY           eNetDBProperty;
                         USHORT       usDataLength;
                         NMDATA       Data;
 } NRSP_GET_PROPERTY;
```

### Service Parameters

This service is invoked using the NS_GET_PROPERTY structure, with these parameters:

```
 eNetObjectType - the network object type:
 NETWORK_OBJECT_NODE
 NETWORK_OBJECT_ADDRESS_GROUP
 NETWORK_OBJECT_CONNECTION
 NETWORK_OBJECT_NETWORKDBM
 NetObjectInstance - the numeric designation for particular
instance of the specified NetObjectType.
 eNetDBProperty - type property of the object to be read:
 // Node properties
 NETWORK_PROPERTY_NEURON_ID
 NETWORK_PROPERTY_NODESTATE
 NETWORK_PROPERTY_ADDRESSTABLE
 // Connection properties
 NETWORK_PROPERTY_NODE
 NETWORK_PROPERTY_CONNSTATE
 NETWORK_PROPERTY_DIRECTION
 NETWORK_PROPERTY_SERVICETYPE
 NETWORK_PROPERTY_PRIORITY
 NETWORK_PROPERTY_AUTHENTICATE
 NETWORK_PROPERTY_GROUP
 NETWORK_PROPERTY_CONNECTIONLIST
 // Address Group properties
 NETWORK_PROPERTY_RETRYCOUNT
 NETWORK_PROPERTY_REPEATTIMER
 NETWORK_PROPERTY_RECEIVETIMER
 NETWORK_PROPERTY_TRANSMITTIMER
 NETWORK_PROPERTY_GROUP_MEMBERS
 // NetworkDBM properties
 NETWORK_PROPERTY_REVISION
 NETWORK_PROPERTY_LAST_UPDATE
 NETWORK_PROPERTY_NUM_ADDGROUPS
 NETWORK_PROPERTY_NUM_NODES
 NETWORK_PROPERTY_NUM_CONNECTS
 NETWORK_PROPERTY_CLIENT_LIST
 NETWORK_PROPERTY_NETDBM_STATE
```

### Result Data

The result of this service is returned in a NRSP_GET_PROPERTY structure, with these parameters: eNetObjectType - the network object type.
NetObjectInstance - the numeric designation for particular instance of the specified NetObjectType.
eNetDBProperty - property of object being read.
usDataLength - the length of the data returned.
Data - data

### Error Codes

NM_ERROR_INVALID_OBJECT_TYPE
NM_ERROR_INVALID_OBJECT_INSTANCE
NM_ERROR_INVALID_PROPERTY

### Algorithm

1. Verify parameters
2. Return value

### 8.6.13 NS_SET_PROPERTY

### Description

This service is used to set a property within the Network DB.

```
 typedef _NSGetProperty {
                         NETWORKDBOBJECT     eNetObjectType;
                         NETWORKOBJECTINSTANCE       NetObjectInstance;
                         NETWORKDBPROPERTY   eNetDBProperty;
                         USHORT   usDataLength;
                         NMDATA   Data;
 } NS_SET_PROPERTY;
```

### Service Parameters

This service is invoked using the NS_SET_PROPERTY structure, with these paramters:
eNetObjectType - the network object type. (For list of Object Types see NSGetProperty)
NetObjectInstance - the numeric designation for particular instance of the specified NetObjectType.
eNetDBProperty - property of object being read. (For list of Property Types see NSGetProperty) usDataLength - the length of the data.
Data - data

### Result Data

No data.

### Error Codes

NM_ERROR_INVALID_OBJECT_TYPE
NM_ERROR_INVALID_OBJECT_INSTANCE
NM_ERROR_INVALID_PROPERTY

### Algorithm

1. Verify parameters
2. Return value

### 8.6.14 NS_EXPORT_DATABASE (optional)

### Description

This service is used to extract the Network DB from an embedded node for backup purposes or to move it to another node (for example, moving from a LC-NM to a NP.)

```
 typedef _NSExportDatabase {
               DEVICE_ID      DeviceId;
               EXPORTTYPE     eExportType;
 } NS_EXPORT_DATABASE;
 typedef _NRSPExportDatabase {
               DATABASEREV    Revision;
               DATE     LastUpdate;
               USHORT   usSizeNodeTable;
               USHORT   usSizeConnectionTable;
               USHORT   usSizeAddressTable;
} NRSP_EXPORT_DATABASE;
```

### Service Parameters

This service is invoked using the NS_EXPORT_DATABASE structure, with these parameters:
DeviceId - the device identifier of the device which will read the database.
eExportType - the type of export. If eExportType = MOVE then NetworkDBM will change his state to indicate that this device is no longer the Network Manager. If eExportType = BACKUP then

### Result Data

The result of this service is returned in a NRSP_EXPORT DATABASE structure, with these parameters: Revision - the revision of NetworkDBM.
usSizeNodeTable - number of bytes in node table
usSizeConnectionTable -
usSizeAddressTable -

### Error Codes

NM_ERROR_INVALID_EXPORT_TYPE

### Algorithm

1. Lock NetworkDB
2. If eExportType = MOVE
   a) Set lamNetworkManger = FALSE;

### 8.6.15 NS_IMPORT_DATABASE (optional)

### Description

This service is used to initialize a Network DB with data that was backed up or moved from another node.

```
 typedef _NSImportDatabase {
                      DEVICE_ID      DeviceId;
                      IMPORTTYPE     eImportType;
                      USHORT   usSizeNodeTable;
                      USHORT   usSizeConnectionTable;
                      USHORT   usSizeAddressTable;
 } NS_IMPORT_DATABASE;
 typedef _NRSPImportDatabase {
                      DATABASEREV    Revision;
 } NRSP_IMPORT_DATABASE;
```

### Service Parameters

This service is invoked using the NS_IMPORT_DATABASE structure, with these parameters:
DeviceId - the device identifier of the device which will download the database.
elmportType - the type of export.
usSizeNodeTable - size of space to allocate for NodeTable
usSizeConnectionTable - size of space to allocate for Connection Table
usSizeAddressTable - size of space to allocate for AddressTable

### Result Data

The result of this service is returned in a NRSP_EXPORT_DATABASE structure, with these parameters:
Revision - the revision of NetworkDBM.

### Error Codes

### Algorithm

1. Put database in locked state
2. If new database
   a) allocate space
3. If database exist
   a) clear database
   b) resize if needed
4. Wait for download

### 8.6.16 NS_REGISTER_NSP

### Description

This service will register a Network SP with the NetworkDBM. This service allows a Network SP to receive events from the NetworkDBM. Events will be generated on the receipt of service pin messages, and when nodes are.

```
 typedef USHORT REGISTERTYPE;
 typedef struct _NSRegisterClient {
                      NODEHANDLE      hNodeToRegister;
                      REGISTERTYPE    eRegisterType;
                      DURATION eDuration;
 } NS_REGISTER_CLIENT;
```

### Service Parameters

This the RegisterClient service is invoked using the NS_REGISTER_CLIENT structure, with the following parameters:
hNodeToRegister - the the node handle of the registering device.
RegisterType - the type of events and exceptions the client wishes to receive.
REGISTER_ALL 0xFFFF
Duration-the duration of the registration. If Duration = PERMANENT_REGISTER the registrations will be maintained through a device reset. If Duration = TEMPORARY_REGISTER the registration will not be maintained through a device reset.

### Result Data

No data.

### Error Codes

NM_ERROR_EXCEED_MAX_CLIENTS

### Algorithm

1. Register the device.
2. If Duration = PERMANENT_REGISTER
   a) write registration information to permanent storage

### 8.7 Network DBM Exception Messages

Exception messages are used to pass information in a non-request/response format.

### 8.7.1 NS_XCP_NETWORK_SP_ADDED

### Description

This message will be sent by the Network DBM to a Network SP to indicate the Network SP has been added to the database and assigned it a valid subnet /node address.

```
 typedef struct _NSNetworkSPAdded {
                     DATABASEREV     Revision;
                     DEVICE_ID       NetDBMDevice;
 } NS_NETWORK_SP_ADDED;
```

### Service Parameters

Revision - current revision of NetworkDBM running in the NetworkDBM device.
NetDBMDevice - device running NetworkDBM.

### 8.7.2 NS_XCP_SERVICE_PIN

### Description

The Network DBM will forward all service pin messages to all registered Network SP's.

```
 typedef struct _ NSServicePin {
                      NEURON_ID      sNeuronId;
                      PROGRAM_ID     sProgramId;
 } NS_SERVICE_PIN;
```

### Service Parameters

NeuronId - 6 byte MAC address
ProgramId - 8 byte application program ID

### 8.8 Internal Software Components

### 8.8.1 Session/Transaction State Machine

When a service request is received which requires multiple transactions a session will be initialized. The service will then be broken down into an number of transactions. The transactions will be processed at a rate which can be handle by the transport layers. As network management response messages are received they will be processed to complete the transaction. When all transactions for a given session state are complete the next state will be broken down to more transactions until the last state is reached. At that time a response will be sent and NetworkDBM will be ready to process the next service.
If a request is received while a sessions is in progress it will be dropped on the wait queue for later processing.

### 8.8.2 Error Recovery

To process some NetworkManagement services will require a number of changes in one or more devices. As the needed modifications are determined and processed an error may be detected which indicates that a particular modification could not be completed. This could happen for one of two reasons 1) an error response to a network management message or 2) the device goes to an offline state.
If the failure is due to an error the remaining modifications will be processed if possible. The NetworkDB will be modified to represent the desired state of all devices had the service completed without error. The state of the offending device will be set to indicate the error condition. A response to the service request will be returned indicating the partial completion of the service. A service event will notify other NetworkSP of the database device mismatch. Any further service requests which affect the offending device without correcting the problem will return an error response.
If a device goes off line before a planned modification can be completed the device state will indicate such and the service response will indicate partial completion of the service. When the device returns to an online state the modifications will be completed and an exception generated.

### 8.8.3 Address Table Modifications

```
 ULONG SelectAddressGroup (      UCHAR *pucNodeCount,
                      UCHAR      *pucNode,
                      UCHAR      *pucAddressGroup,
                      USHORT     *eResult) ;
```

### PARAMETERS

pucNodeCount - pointer to the number of nodes in this connection. If and existinggroup is modified and addtional panels added then this count will beincreased.
pucNode - pointer to an array of nodes. pucAddressGroup - pointer to AddressGroup number. If selection is successful an address group number will be returned.
eResult - pointer to Result

| | |
|---|---|
| SEL_MATCH | an existing group was found with all nodes |
| SEL_NEW_GROUP | a new group was created |
| SEL_MODIFY _GROUP | an existing group was modified |

### Errors

NM_ERROR_ADDRESS_CONFLICT
NM_ERROR_EXCEED_MAX_ADDRESS_GROUPS
NM_ERROR_EXCEED_MAX_ADDRESS_IN_NODE

### Algorithm

1. For connect request generate connection node list.
2. Scan address table for address group containing the most nodes from connection list.
   a) If one group containing all nodes found then
      i) return group
   b) If multiple groups containing all nodes found then
      i) return group with the least number of nodes
   c) If no groups found containing all nodes then
      i) return group with the most nodes
3. If group found containing all nodes then
   a) bind using that group
4. If group not found containing all nodes then evaluate for new group of modified group
   a) if all nodes have 4 or more openings in the address table then
      i) add new group
      ii) bind using that group
   b) if any node has less than 4 openings then
      i) pick address group to modify
   a) order node list based on number of openings in address table
   b) using groups from first nodes (per sort order) address table find the group which contains the most nodes in sequence
      ii) add remaining nodes to that group
      iii) bind using that group
5. If more than one node has a full address table and no group contains them all then
   a) evaluate groups for merging
      i) find the list of nodes which have full address tables
      ii) find the set of groups containing all these nodes which contains the smallest total number of nodes
      iii) combine these nodes into one group
   b) modify all address tables and bindings affected by the regrouping
   c) bind using new group

### 9. Network Database

### 9.1 Overview

The network database is the repository for all network management information. It may only be accessed by Network DBM.
There will be a separate Network DB for each Field Bus. The Network DB contains information on all the Nodes on the Field Bus, the address groups, and the connections between network variables on that Field Bus.
The NetworkDB contains the following tables:
1. NODE_TABLE
2. HUB_ TABLE
3. TARGET_ TABLE
4. GROUP_TABLE

### 9.2 Database Structures

### 9.2.1 Node Table

The NodeTable contains general information on the complete data base. It also includes information for each managed node which is needed by Network DBM to process requested services.

### Node Table Struct

```
 typedef struct _NMNodeTable
 {
                      XUSHORT usNDBRevision;
                      NDBM_STATE    eNDBMState;
                      NMDATE_TIME   sLastUpdate;
                      SUBNET_NODE_ADDR      sMySubnetNode;
                      XBYTE btMaxNumNodes;
                      NODE_DATA     asNodeData[];
 } NODE_TABLE;
```

### Parameter Description

usNDBRevision - revision number of database structures.
eNDBMState - enumeration indicating Network DBM state: NDBM_STATE_UNINITIALIZED = 0
NDBM_STATE_IAM_NETDBM = 1
NDBM_STATE_DISABLED = 2
NDBM_STATE_EXCEPTION = 3
sLastUpdate - date time of last modification to Network DB.
sMySubnetNode - subnet node address of node containin Network DBM.
btMaxNumNodes - the maximum number of entries in the asNodeData array.
asNodeData[] - an array of data structures for each node in the database.

### Node Data Struct

```
 typedef struct _NodeDataStruct
{
                      NODE_TYPE       eNodeType;
                      NODE            Node;
   SUBNET           SubNet;
   NEURON_ID_       NeuronID;
   PROGRAM_ID_      IdString;
   NODE_STATE       eNodeState;
   XBIT8            bitAddressCount : 4;
   XBIT8            bitAddressesUsed : 4;
   XBIT8            bitHostedNode : 1;
                         XBIT8 bitTwoDomains : 1;
   XBIT8            bitUnused : 6;
   XUSHORT          usNumNVs;
                      XBYTE            btVersionSNVTStruct;
                      XUSHORT          usSNVTStructAddress;
                      CMR_ADDRESS      sNodeAddress;
   ADDRESS_DATA     asAddressData{MAX_NUM_ADDR_TABLE_ENTRIES};
 } NODE_DATA;
```

### Parameter Description

eNodeType - enumeration indicating the type of node:

| | |
|---|---|
| NODE_TYPE_UNKNOWN | 0 |
| NODE_TYPE_SELF | 1 |
| NODE_TYPE_PERMANENT | 2 |
| NODE_TYPE_TEMPORARY | 3 |

Node - the node ID number.
SubNet - the subnet the node is a member of. This defaults to I for now.
NeuronID - the 48 bit ID assigned by the manufacturer of the Neuron Chip
IdString - the devices program id.
eNodeState - the current state of the node.

| | |
|---|---|
| NODE_UNKNOWN | 0 |
| NODE_UNCOMMISSIONED | 1 |
| NODE_ONLINE | 2 |
| NODE_OFFLINE | 3 |

bitAddressCount - the number of entries in the nodes address table per the nodes ReadOnly data bitAddressesUsed - the number of entries in the address table currently used. This is used when processing groups to determine if the node can be added to a new group.
bitHostedNode - TRUE if the node has a host processor.
bitTwoDomains - TRUE if the node supports two domain.
bitUnused - spare bits.
usNumNVs - the number of NVs in the node.
btVersionSNVTStruct - the version number of the SNVT info structure. This is used when reading subsequent records in the SNVT info table.
usSNVTStructAddress - the address of the SNVT structure from Neuron's ReadOnly data structure. sNodeAddress - address to use when communicating with the device.
asAddressData - table used to store information needed to maintain the address group table in the node.

```
 Address Table Data Struct
 typedef struct _AddressData
 {
   XBIT8          bitInUse : 1;
   XBIT8          bitConnDescId : 4;
   XBIT8          bitAddressType : 3;
   union {
      struct {
          XBYTE          btMemberId;
          GROUP_ID       GroupId;
       } sGroup;
      struct {
          XBYTE          btSubNet;
          XBYTE          btNode;
       } sNode;
      struct {
          XBYTE          btSubNet;
          XBYTE          btBackLog;
       } sBCast;
   };
 } ADDRESS_DATA;
```

### Parameter Description

bitInUse - TRUE if this entry in the address table is currently inuse.
bitConnDescld - the Connection Description used for this address entry.
bitAddressType - the type of address entry:

| | |
|---|---|
| ADDRESS_TYPE_NOT_INUSE | 0 |
| ADDRESS_TYPE_GROUP | 1 |
| ADDRESS_TYPE_SUBNET_NODE | 2 |
| ADDRESS_TYPE_BROADCAST | 3 |
| ADDRESS_TYPE TURN_AROUND | 4 |

sGroup.btMemberId - if bitAddressType == ADDRESS_TYPE_GROUP the member id of this node within the group. Valid values 1-63.
sGroup.GroupId - if bitAddressType = ADDRESS_TYPE_GROUP the group identifier. Valid values 1-255.
sNode.btSubNet - if bitAddressType == ADDRESS_TYPE_SUBNET_NODE the subnet in which the addressed node is a member.
sNode.btNode - if bitAddressType == ADDRESS_TYPE_ SUBNET_NODE the addressed node.
sBCast.btSubNet - if bitAddressType == ADDRESS_TYPE_BROADCAST the subnet on which to send a bcast message.
sBCast.btBackLog - if bitAddressType == ADDRESS_TYPE_ BROADCAST

### 9.2.2 Connection Tables

### Connection Hub Table Struct

```
 typedef struct NMConnectionHubTable
 {
   XUSHORT                usMaxNumHubs;
   CONNECTION_HUB_DATA    asHubData[];
 } HUB_TABLE;
```

### Parameter Description

usMaxNumHubs - the size of the asHubData array.
asHubData[] - an array of data structures for the Hub of each connection in the database.

### Connection Hub Data Struct

```
 typedef struct _ConnectionHubStruct
 {
   NODEHANDLE          hNode;
   CONN_DESC_ID        ConnDescId;
   XBIT8               bit Direction : 1;
   XBIT8               bitConnState : 3;
   XBIT8               bitAddressIndex : 4;
   GROUP_ID            GroupId;
   NVINDEX             HubNVIndex;
   XUSHORT             usFirstTarget;
                       XBYTE            btSNVTType;
 } CONNECTION_HUB_DATA;
```

### Parameter Description

hNode - the node handle of the device containing the Hub NV.
ConnDescId - the connection description used to describe this connection.
bitDirection - the direction of the Hub NV.
bitConnState - state of the connection:
CONNECTION_STATE_UNBOUND
CONNECTION_STATE_INPROCESS
CONNECTION_STATE_BOUND
bitAddressIndex - the index in the nodes address table used for this connection.
GroupId - the group number if group addressing is used with this connection, zero if subnet node addressing, 0xFFFF if broadcast addressing used.
HubNVIndex - the Index of the hub NV.
usFirstTarget - index in the connection target table of first target NV.
btSNVTType - Hub NV's SNVT type.

### Connection Target Table Struct

```
 typedef struct _NMConnectionTargetTable
 {
   XUSHORT                     usMaxNumTargets;
   XUSHORT                     usFreeTarget;
   XUSHORT                     usTargetsAvailable;
   CONNECTION_TARGET_DATA      asTargetData[];
 } TARGET_TABLE;
```

### Parameter Description

usMaxNumTargets - the number of elements in the asTargetData array.
usFreeTarget - index of the first free target index.
usTargetsAvailable - the number of unused target entries.
asTargetData[] - array of data structures to describe each target.

### Connection Target Data Struct

```
 typedef struct _ConnectionTargetStruct {
   NODEHANDLE    hNode;
   XUSHORT       usNVIndex;
   XBYTE         btAddressIndex;
   XUSHORT       usNextTarget;
 } CONNECTION_TARGET_DATA;
```

### Parameter Description

hNode - handle for the node containing this target NV
usNVIndex - index of the target NV
btAddressIndex - the index in the nodes address table used for this connection.
usNextTarget - index of next termination in the TermTable, zero for the last termination in the list

### 9.2.3 Group Table

### Group Table Struct

```
 typedef struct _NMGroupTable
 {
   XBYTE                    btNumConnDesc;
   CONNECTION_DESC          asConnDescription[MAX_NUMBER_CONN_DESC+1];
   XBYTE                    btHighestAddressGroup;
   XUSHORT                  usMaxMemberIndex;
   XUSHORT                  usHighestMemberIndex;
   ADDRESSGROUP             asAddrGroup[MAX_ NUMBER_ADDRESS_GROUPS+1];
   GROUPMEMBER              asGroupMember[];
 } GROUP_TABLE;
```

### Parameter Description

btNumConnDesc - the number of connection descriptions defined not to exceed MAX_NUMBER_CONN_DESC. Currently = 10.
asConnDescription[] - array of connection descriptions referenced by the array index.
btHighestAddressGroup - the highest address group currently defined. Valid values I-MAX_NUMBER _ADDRESS_GROUPS, currently = 255;
usMaxMemberIndex - the size of the GroupMember array.
usHighestMemberlndex - the highest GroupMember index currently inuse.
asAddrGroup[] - array of data to describe each address group. GroupId is array index.
asGroupMember[] - array of data for each member. Group members are maintained in sequential array elements in ascending order by Node handle.

### Address Group Data Struct

```
 typedef struct _AddressGroup {
   XBYTE             btNumberOfMembers;
   XUSHORT           usGroupMemberIndex;
   CONN_DESC_ID      ConnDescId;
 } ADDRESSGROUP;
```

### Parameter Description

btNumberOfMembers - the total number of members in this group.
usGroupMemberIndex - the index of the first group member in the GroupMember array.
ConnDescId - the connection description used for this address group.

### Group Members Table

```
 typedef struct _GroupMember {
   XBIT8             bitNodeInitialize : 1;
   XBIT8             bitAddressIndex : 7;
   NODEHANDLE        hNode;
 } GROUPMEMBER;
```

### Parameter Description

bitNodeInitialize - TRUE if member data is filled.
bitAddressIndex - the index in the address table used to store this group address.
hNode - the affected node

### Connection Description Struct

```
 typedef struct _ConnDescription {
   XBYTE      btServiceType;
   XBYTE      btPriority;
   XBYTE      btAuthenticate;
   XBYTE      btRetryCount;
   XBYTE      btRepeatTimer;
   XBYTE      btReceiveTimer;
   XBYTE      btTransmitTimer;
 } CONNECTION_DESC;
```

### Parameter Description

btService Type - the service type used for update messages.
SERVICE_TYPE_ACKD
SERVICE_TYPE_UNACKD_RPT
SERVICE_TYPE_UNACKD
SERVICE_TYPE REQUEST
btPriority - TRUE if update messages use priority channel.
btAuthenticate - TRUE if update messages use authentication.
btRetryCount - number of retries used for acknowledged services and for polling.
btRepeatTimer - time between repetitions when using repeat message service.
btReceiveTimer - time period over which receiving nodes treat messages with the same source and reference ID as duplicate messages (2^{7+(n/2)} mSecs).
btTransmitTimer - time between retries for repeat and acknowledged services (2^{4+(n/2)} mSecs).

## Claims

1. An ECHELON network (14) comprising:
an embedded node (10, 10', 16) including a network database manager (13) responsive to network management service requests from multiple client applications;
at least one ECHELON connection (33, 45) communicably coupled to at least one other node to said multiple client applications, and to at least one network service provider;
said embedded node including a network database (11) having connectivity information for said at least one ECHELON connection (33, 45);
Wherein said at least one network service provider is coupled to said network database manager.

2. The ECHELON network as set forth in claim 1, wherein said at least one other node comprises a workstation (12).

3. The ECHELON network as set forth in claim 2, wherein said workstation comprises said multiple clients.

4. The ECHELON network as set forth in claim 1, further comprising a plurality of ECHELON connections adapted for connection to a plurality of other nodes, said network database having connectivity information for each of said plurality of ECHELON connections.

5. The ECHELON network as set forth in claim 4, wherein said plurality of other nodes further comprises a plurality of workstations each having at least one client.

6. The ECHELON network as set forth in claim 1, being adapted for operation alternately with and without said network service provider being coupled thereto.

7. The ECHELON network as set forth in claim 1, wherein said plurality of clients are integrally coupled to said at least one network service provider and said at least one network service provider is adapted for being coupled remotely to said embedded node.

8. The ECHELON network as set forth in claim 1, further comprising a plurality of ECHELON connections adapted for connection to a plurality of other nodes, said network database having connectivity information for each of said plurality of ECHELON connections.

9. The ECHELON network as set forth in claim 8, wherein said plurality of other nodes further comprises at least one first node and at least one second node, said at least one first node including said network service provider;
said embedded node being coupled to said at least one second node by a network bus; and
said embedded node adapted for being coupled to said at least one first node by a coupling discrete from said network bus.

10. The ECHELON network as set forth in claim 9, further comprising a plurality of said first nodes each including a discrete network service provider.

11. The ECHELON network as set forth in claim 8, wherein said embedded node is coupled to said plurality of other nodes by a network bus.

12. The ECHELON network as set forth in claim 8, wherein said plurality of other nodes further comprises at least one first node and at least one second node, said at least one first node including said network service provider;
said embedded node being locally coupled to said at least one second node so that network traffic between said network database manager and said at least one second node is effected irrespective of a network service provider.

13. The ECHELON network as set forth in claim 12, wherein said embedded node is adapted for being remotely coupled to said at least one first node.

14. The ECHELON network as set forth in claim 1, further comprising said at least one other node being connected to said at least one ECHELON connection, said at least one other node including a network service provider and a plurality of clients.

15. The ECHELON network as set forth in claim 14, wherein said at least one node further comprises at least one first node and at least one second node, said at least one first node including said network service provider;
said embedded node being locally coupled to said at least one second node; and
said embedded node being remotely coupled to said at least one first node.

16. The ECHELON network as set forth in claim 1, wherein said embedded node is without a network service provider.

17. The ECHELON network as set forth in claim 16, wherein said embedded node is adapted for being coupled to a network service provider.

18. An embedded node (10, 10', 16) for use in an ECHELON network (14), the node comprising:
a network database manager (13);
a network database (11) coupled to said network database manager (13);
said network database manager (13) responsive to network management service requests from multiple clients that may be disposed on said ECHELON network (14); and
said network database (11) including connection tables (91, 93) for maintenance of variable connection for multiple clients within said ECHELON network.

19. An ECHELON network including:
a first node, said first node being an embedded node (10, 10', 16) and including a network database manager (13) and a network database (11) coupled thereto, said network database manager (13) responsive to network management service requests;
a second node, said second node being an operator workstation (12) and including a network service provider (35) adapted to generate said network management service requests; and
said second node including a plurality of clients adapted to generate said network management service requests;
wherein said first node and said second node are communicably coupled through a network connection (14, 15) to facilitate ECHELON network management.

20. The ECHELON network as set forth in claim 19, further comprising a plurality of said second nodes.

21. The ECHELON network as set forth in claim 20, wherein at least one of said plurality of second nodes is remotely coupled to said first node.

22. The ECHELON network as set forth in claim 20, wherein at least one of said plurality of second nodes is locally coupled to said first node.

23. A method of operation in an ECHELON network (14), said method comprising:
executing a plurality of application programs (39) in a first computer (12);
executing a network service provider (35) on said first computer, said network service provider being communicably coupled with said application program (39) in the provision of network management services; and
executing a network database manager (13) on a second, embedded computer (10, 10', 16) said network database manager (13) being communicably coupled to said network service provider (35) through said ECHELON network (14) in the provision of network database management to said network service provider (35).

24. The method as set forth in claim 23, wherein said embedded node is operated by:
creating a message queue;
creating a wait queue;
receiving network management service request messages;
receiving LONTALK messages over said ECHELON network;
processing LONTALK messages relating to a current network management service request through said message queue; and
storing messages relating to other than current network management service requests on said wait queue.

25. A method of operation of an ECHELON network (14) including an embedded node (10, 10', 16) and at least two other nodes, said method comprising the steps of:
said embedded node (10, 10', 16) including a network database (11) containing information relating to said at least two other nodes, and being responsive to communication from multiple clients;
said embedded node (10, 10', 16) receiving a first LONTALK message from a first node of said at least two other nodes, said message being a precipitator of a first network database action by said embedded node (10, 10', 16);
said embedded node (10, 10', 16) beginning said network database action resulting from said first LONTALK message; and
said embedded node (10, 10', 16) receiving a second LONTALK message from a second node of said at least two other nodes, said message being a precipitator of another network database action by said embedded node (10, 10', 16); and
said embedded node (10, 10', 16) completing said first network database action prior to acting upon said other network database action.

## Patentansprüche

1. ECHELON-Netzwerk (14), welches aufweist:
einen eingebetteten Knoten (10, 10', 16) mit einem Netzwerkdatenbank-Manager (13), der auf Netzwerkverwaltungsdienstanforderungen von mehreren Clientanwendungen anspricht,
mindestens eine ECHELON-Verbindung (33, 45), die kommunikationsfähig mit mindestens einem anderen Knoten zu den mehreren Clientanwendungen und mit mindestens einem Netzwerkdienstanbieter verbunden ist,
wobei der eingebettete Knoten eine Netzwerkdatenbank (11) aufweist, die Verbindbarkeitsinformationen für die mindestens eine ECHELON-Verbindung (33, 45) aufweist,
wobei der mindestens eine Netzwerkdienstanbieter mit dem Netzwerkdatenbank-Manager verbunden ist.

2. ECHELON-Netzwerk nach Anspruch 1, wobei der mindestens eine andere Knoten eine Workstation (12) aufweist.

3. ECHELON-Netzwerk nach Anspruch 2, wobei die Workstation die mehreren Clients aufweist.

4. ECHELON-Netzwerk nach Anspruch 1, welches weiter mehrere ECHELON-Verbindungen aufweist, die zur Verbindung mit mehreren anderen Knoten ausgelegt sind, wobei die Netzwerkdatenbank Verbindbarkeitsinformationen für jede der mehreren ECHELON-Verbindungen aufweist.

5. ECHELON-Netzwerk nach Anspruch 4, wobei die mehreren anderen Knoten weiter mehrere Workstations aufweisen, die jeweils mindestens einen Client aufweisen.

6. ECHELON-Netzwerk nach Anspruch 1, welches für einen Betrieb alternativ mit dem damit verbundenen Netzwerkdienstanbieter oder ohne diesen ausgelegt ist.

7. ECHELON-Netzwerk nach Anspruch 1, wobei die mehreren Clients integral mit dem mindestens einen Netzwerkdienstanbieter verbunden sind und der mindestens eine Netzwerkdienstanbieter dafür ausgelegt ist, fern mit dem eingebetteten Knoten verbunden zu werden.

8. ECHELON-Netzwerk nach Anspruch 1, welches weiter mehrere ECHELON-Verbindungen aufweist, die zur Verbindung mit mehreren anderen Knoten ausgelegt sind, wobei die Netzwerkdatenbank Verbindbarkeitsinformationen für jede der mehreren ECHELON-Verbindungen aufweist.

9. ECHELON-Netzwerk nach Anspruch 8, wobei die mehreren anderen Knoten weiter mindestens einen ersten Knoten und mindestens einen zweiten Knoten aufweisen, wobei der mindestens eine erste Knoten den Netzwerkdienstanbieter aufweist,
wobei der eingebettete Knoten mit dem mindestens einen zweiten Knoten durch einen Netzwerkbus verbunden ist und
der eingebettete Knoten dafür ausgelegt ist, durch eine Verbindung, die von dem Netzwerkbus diskret ist, mit dem mindestens einen ersten Knoten verbunden zu werden.

10. ECHELON-Netzwerk nach Anspruch 9, welches weiter mehrere der ersten Knoten aufweist, die jeweils einen diskreten Netzwerkdienstanbieter aufweisen.

11. ECHELON-Netzwerk nach Anspruch 8, wobei der eingebettete Knoten mit den mehreren anderen Knoten durch einen Netzwerkbus verbunden ist.

12. ECHELON-Netzwerk nach Anspruch 8, wobei die mehreren anderen Knoten weiter mindestens einen ersten Knoten und mindestens einen zweiten Knoten aufweisen, wobei der mindestens eine erste Knoten den Netzwerkdienstanbieter aufweist,
wobei der eingebettete Knoten lokal mit dem mindestens einen zweiten Knoten verbunden ist, so dass Netzwerkverkehr zwischen dem Netzwerkdatenbank-Manager und dem mindestens einen zweiten Knoten unabhängig von einem Netzwerkdienstanbieter behandelt wird.

13. ECHELON-Netzwerk nach Anspruch 12, wobei der eingebettete Knoten dafür ausgelegt ist, fern mit dem mindestens einen ersten Knoten verbunden zu werden.

14. ECHELON-Netzwerk nach Anspruch 1, wobei der mindestens eine andere Knoten weiter mit der mindestens einen ECHELON-Verbindung verbunden ist, wobei der mindestens eine andere Knoten einen Netzwerkdienstanbieter und mehrere Clients aufweist.

15. ECHELON-Netzwerk nach Anspruch 14, wobei der mindestens eine Knoten ferner mindestens einen ersten Knoten und mindestens einen zweiten Knoten aufweist, wobei der mindestens eine erste Knoten den Netzwerkdienstanbieter aufweist,
wobei der eingebettete Knoten lokal mit dem mindestens einen zweiten Knoten verbunden ist und
der eingebettete Knoten fern mit dem mindestens einen ersten Knoten verbunden ist.

16. ECHELON-Netzwerk nach Anspruch 1, wobei der eingebettete Knoten keinen Netzwerkdienstanbieter aufweist.

17. ECHELON-Netzwerk nach Anspruch 16, wobei der eingebettete Knoten dafür ausgelegt ist, mit einem Netzwerkdienstanbieter verbunden zu werden.

18. Eingebetteter Knoten (10, 10', 16) zur Verwendung in einem ECHELON-Netzwerk (14), wobei der Knoten aufweist:
einen Netzwerkdatenbank-Manager (13),
eine Netzwerkdatenbank (11), die mit dem Netzwerkdatenbank-Manager (13) verbunden ist,
wobei der Netzwerkdatenbank-Manager (13) auf Netzwerkverwaltungsdienstanforderungen von mehreren Clients anspricht, die sich in dem ECHELON-Netzwerk (14) befinden können, und
die Netzwerkdatenbank (11) Verbindungstabellen (91, 93) zur Wartung variabler Verbindungen für mehrere Clients innerhalb des ECHELON-Netzwerks aufweist.

19. ECHELON-Netzwerk, welches aufweist:
einen ersten Knoten, der ein eingebetteter Knoten (10, 10', 16) ist und einen Netzwerkdatenbank-Manager (13) und eine damit verbundene Netzwerkdatenbank (11) aufweist, wobei der Netzwerkdatenbank-Manager (13) auf Netzwerkverwaltungsdienstanforderungen anspricht,
einen zweiten Knoten, der eine Betreiber-Workstation (12) ist und einen Netzwerkdienstanbieter (35) aufweist, der dafür ausgelegt ist, die Netzwerkverwaltungsdienstanforderungen zu erzeugen,
wobei der zweite Knoten mehrere Clients aufweist, die dafür ausgelegt sind, die Netzwerkverwaltungsdienstanforderungen zu erzeugen,
wobei der erste Knoten und der zweite Knoten durch eine Netzwerkverbindung (14, 15) kommunikationsfähig verbunden sind, um die ECHELON-Netzwerkverwaltung zu erleichtern.

20. ECHELON-Netzwerk nach Anspruch 19, welches weiter mehrere der zweiten Knoten aufweist.

21. ECHELON-Netzwerk nach Anspruch 20, wobei mindestens einer der mehreren zweiten Knoten fern mit dem ersten Knoten verbunden ist.

22. ECHELON-Netzwerk nach Anspruch 20, wobei mindestens einer der mehreren zweiten Knoten lokal mit dem ersten Knoten verbunden ist.

23. Verfahren zum Betrieb in einem ECHELON-Netzwerk (14), wobei das Verfahren aufweist:
Ausführen mehrerer Anwendungsprogramme (39) in einem ersten Computer (12),
Ausführen eines Netzwerkdienstanbieters (35) in dem ersten Computer, wobei der Netzwerkdienstanbieter beim Bereitstellen von Netzwerkverwaltungsdiensten kommunikationsfähig mit dem Anwendungsprogramm (39) verbunden wird, und
Ausführen eines Netzwerkdatenbank-Managers (13) in einem zweiten eingebetteten Computer (10, 10', 16), wobei der Netzwerkdätenbank-Manager (13) durch das ECHELON-Netzwerk (14) beim Bereitstellen der Netzwerkdatenbankverwaltung für den Netzwerkdienstanbieter (35) kommunikationsfähig mit dem Netzwerkdienstanbieter (35) verbunden wird.

24. Verfahren nach Anspruch 23, wobei der eingebettete Knoten betrieben wird durch:
Erzeugen einer Nachrichtenwarteschlange,
Erzeugen einer Warteschlange,
Empfangen von Netzwerkverwaltungsdienstanforderungs-Nachrichten,
Empfangen von LONTALK-Nachrichten über das ECHELON-Netzwerk,
Verarbeiten von LONTALK-Nachrichten, die sich auf eine aktuelle Netzwerkverwaltungsdienstanforderung beziehen, über die Nachrichtenwarteschlange und
Speichern von Nachrichten, die sich auf andere als aktuelle Netzwerkverwaltungsdienstanforderungen beziehen, in der Warteschlange.

25. Verfahren zum Betrieb eines ECHELON-Netzwerks (14) mit einem eingebetteten Knoten (10, 10', 16) und mindestens zwei anderen Knoten,
wobei das Verfahren die folgenden Schritte aufweist:
Aufnehmen einer Netzwerkdatenbank (11), die Informationen in Bezug auf die mindestens zwei anderen Knoten enthält, ansprechend auf eine Kommunikation von mehreren Clients, in den eingebetteten Knoten (10, 10', 16),
Empfangen einer ersten LONTALK-Nachricht von einem ersten Knoten der mindestens zwei anderen Knoten, wobei die Nachricht ein Vorläufer einer ersten Netzwerkdatenbankaktion durch den eingebetteten Knoten (10, 10', 16) ist, durch den eingebetteten Knoten (10, 10', 16),
Beginnen der Netzwerkdatenbankaktion, die sich aus der ersten LONTALK-Nachricht ergibt, durch den eingebetteten Knoten (10, 10', 16) und
Empfangen einer zweiten LONTALK-Nachricht von einem zweiten Knoten der mindestens zwei anderen Knoten, wobei die Nachricht ein Vorläufer einer anderen Netzwerkdatenbankaktion durch den eingebetteten Knoten (10, 10', 16) ist, durch den eingebetteten Knoten (10, 10', 16) und
Abschließen der ersten Netzwerkdatenbankaktion vor dem Verarbeiten der anderen Netzwerkdatenbankaktion durch den eingebetteten Knoten (10, 10', 16).

## Revendications

1. Réseau ÉCHELON (14) comportant :
un noeud intégré (10, 10', 16) incluant un gestionnaire de base de données réseau (13) répondant à des demandes de service de gestion de réseau provenant de multiples applications clientes,
au moins une connexion ÉCHELON (33, 45) couplée par voie de communication à au moins un autre noeud desdites multiples applications clientes, et à au moins un fournisseur de services réseau,
ledit noeud intégré incluant une base de données réseau (11) ayant des informations de connectivité pour ladite au moins une connexion ECHELON (33, 45),
dans lequel ledit au moins un fournisseur de services réseau est couplé audit gestionnaire de base de données réseau.

2. Réseau ÉCHELON selon la revendication 1, dans lequel ledit au moins un autre noeud comporte un poste de travail (12).

3. Réseau ÉCHELON selon la revendication 2, dans lequel ledit poste de travail comporte lesdits multiples clients.

4. Réseau ÉCHELON selon la revendication 1, comportant de plus une pluralité de connexions ÉCHELON adaptées pour être connectées à une pluralité d'autres noeuds, ladite base de données réseau ayant des informations de connectivité pour chacune de ladite pluralité de connexions ÉCHELON.

5. Réseau ÉCHELON selon la revendication 4, dans lequel ladite pluralité d'autres noeuds comporte de plus une pluralité des postes de travail chacun ayant au moins un client.

6. Réseau ÉCHELON selon la revendication 1, adapté pour un fonctionnement de manière alternée avec et sans ledit fournisseur de services réseau lui étant couplé.

7. Réseau ÉCHELON selon la revendication 1, dans lequel ladite pluralité de clients sont intégralement couplés audit au moins un fournisseur de services réseau et ledit au moins un fournisseur de services réseau est adapté pour être couplé à distance audit noeud intégré.

8. Réseau ÉCHELON selon la revendication 1, comportant de plus une pluralité de connexions ECHELON adaptées pour être connectées à une pluralité d'autres noeuds, ladite base de données réseau ayant des informations de connectivité pour chacune de ladite pluralité de connexions ECHELON.

9. Réseau ÉCHELON selon la revendication 8, dans lequel ladite pluralité d'autres noeuds comporte de plus au moins un premier noeud et au moins un second noeud, ledit au moins un premier noeud incluant ledit fournisseur de services réseau,
ledit noeud intégré étant couplé audit au moins un second noeud par un bus réseau, et
ledit noeud intégré adapté pour être couplé audit au moins un premier noeud par un couplage discret à partir dudit bus réseau.

10. Réseau ÉCHELON selon la revendication 9, comportant de plus une pluralité desdits premiers noeuds chacun incluant un fournisseur de service réseau discret.

11. Réseau ÉCHELON selon la revendication 8, dans lequel ledit noeud intégré est couplé à ladite pluralité d'autres noeuds par un bus réseau.

12. Réseau ÉCHELON selon la revendication 8, dans lequel ladite pluralité d'autres noeuds comporte de plus au moins un premier noeud et au moins un second noeud, ledit au moins un premier noeud incluant ledit fournisseur de services réseau,
ledit noeud intégré étant localement couplé audit au moins un second noeud de sorte qu'un trafic réseau entre ledit gestionnaire de base de données réseau et ledit au moins un second noeud est effectué quel que soit le fournisseur de services réseau.

13. Réseau ÉCHELON selon la revendication 12, dans lequel ledit noeud intégré est adapté pour être couplé à distance audit au moins un premier noeud.

14. Réseau ÉCHELON selon la revendication 1, comportant de plus ledit au moins un autre noeud connecté à ladite au moins une connexion ÉCHELON, ledit au moins un autre noeud incluant un fournisseur de services réseau et une pluralité de clients.

15. Réseau ÉCHELON selon la revendication 14, dans lequel ledit au moins un noeud comporte de plus au moins un premier noeud et au moins un second noeud, ledit au moins un premier noeud incluant ledit fournisseur de services réseau,
ledit noeud intégré étant localement couplé audit au moins un second noeud, et
ledit noeud intégré étant couplé à distance audit au moins un premier noeud.

16. Réseau ÉCHELON selon la revendication 14, dans lequel ledit noeud intégré est sans fournisseur de services réseau.

17. Réseau ÉCHELON selon la revendication 16, dans lequel ledit noeud intégré est adapté pour être couplé à un fournisseur de services réseau.

18. Noeud intégré (10, 10', 16) destiné à être utilisé dans un réseau ÉCHELON (14), le noeud comportant :
un gestionnaire de base de données réseau (13),
une base de données réseau (11) couplée audit gestionnaire de base de données réseau (13),
ledit gestionnaire de base de données réseau (13) répondant à des demandes de service de gestion de réseau provenant de multiples clients qui peuvent être disposés sur ledit réseau ECHELON (14), et
ladite base de données réseau (11) incluant des tables de connexion (91, 93) pour la maintenance d'une connexion variable pour de multiples clients dans ledit réseau ECHELON.

19. Réseau ÉCHELON, incluant :
un premier noeud, ledit premier noeud étant un noeud intégré (10, 10', 16) et incluant un gestionnaire de base de données réseau (13) et une base de données réseau (11) qui lui est couplée, ledit gestionnaire de base de données réseau (13) répondant à des demandes de service de gestion de réseau,
un second noeud, ledit second noeud étant un poste de travail d'opérateur (12) et incluant un fournisseur de services réseau (35) adapté pour générer lesdites demandes de service de gestion de réseau, et
ledit second noeud incluant une pluralité de clients adaptés pour générer lesdites demandes de service de gestion de réseau,
dans lequel ledit premier noeud et ledit second noeud sont couplés par voie de communication via une connexion réseau (14, 15) pour faciliter la gestion de réseau ÉCHELON.

20. Réseau ÉCHELON selon la revendication 19, comportant de plus une pluralité desdits seconds noeuds.

21. Réseau ÉCHELON selon la revendication 20, dans lequel ledit au moins l'un de ladite pluralité de seconds noeuds est couplé à distance audit premier noeud.

22. Réseau ÉCHELON selon la revendication 20, dans lequel au moins l'un de ladite pluralité de seconds noeuds est localement couplé audit premier noeud.

23. Procédé d'opération dans un réseau ÉCHELON (14), ledit procédé comportant les étapes consistant à :
exécuter une pluralité de programmes d'application (39) dans un premier ordinateur (12),
exécuter un fournisseur de services réseau (35) sur ledit premier ordinateur, ledit fournisseur de services réseau étant couplé par voie de communication audit programme application (39) dans la fourniture des services de gestion de réseau, et
exécuter un gestionnaire de base de données réseau (13) sur un second ordinateur intégré (10, 10', 16), ledit gestionnaire de base de données réseau (13) étant couplé par voie de communication audit fournisseur de services réseau (35) via ledit réseau ÉCHELON (14) dans la fourniture de gestion de base de données réseau audit fournisseur de services réseau (35).

24. Procédé selon la revendication 23, dans lequel ledit noeud intégré fonctionne en :
créant une file attente de messages,
créant une file attente,
recevant des messages de demande de service de gestion de réseau,
recevant des messages LONTALK sur ledit réseau ECHELON,
traitant des messages LONTALK relatifs à une demande de service de gestion de réseau courante via ladite file d'attente de messages, et
mémorisant des messages se rapportant à des demandes de service de gestion de réseau autres que courante sur ladite file d'attente.

25. Procédé d'opération d'un réseau ÉCHELON (14) incluant un noeud intégré (10, 10', 16) et au moins deux autres noeuds, ledit procédé comportant les étapes où :
ledit noeud intégré (10, 10', 16) incluant une base de données réseau (11) contenant des informations se rapportant auxdits au moins deux autres noeuds, et répondant à une communication provenant de multiples clients,
ledit noeud intégré (10, 10', 16) recevant un premier message LONTALK depuis un premier noeud desdits au moins deux autres noeuds, ledit message étant un précipitateur d'une première action de base de données réseau par ledit noeud intégré (10, 10', 16),
ledit noeud intégré (10, 10', 16) commençant ladite action de base de données réseau résultant dudit premier message LONTALK, et
ledit noeud intégré (10, 10', 16) recevant un second message LONTALK depuis un second noeud desdits au moins deux autres noeuds, ledit message étant un précipitateur d'une autre action de base de données réseau par ledit noeud intégré (10, 10', 16), et
ledit noeud intégré (10, 10', 16) exécutant ladite première action de base de données réseau avant d'agir sur ladite autre action de base de données réseau.
